(19) Europäisches Patentamt
European Patent Office
Office européen des brevets

(11) **EP 2 780 761 B1**

(12) **EUROPEAN PATENT SPECIFICATION**

(45) Date of publication and mention of the grant of the patent:
**12.07.2017 Bulletin 2017/28**

(21) Application number: **12819056.8**

(22) Date of filing: **16.11.2012**

(51) Int Cl.:
*G02C 7/06* (2006.01)     *G02C 7/02* (2006.01)

(86) International application number:
**PCT/EP2012/004776**

(87) International publication number:
**WO 2013/072065 (23.05.2013 Gazette 2013/21)**

(54) **METHOD FOR PROVIDING AN OPTICAL SYSTEM OF AN OPHTHALMIC SPECTACLE LENS AND METHOD FOR MANUFACTURING AN OPHTHALMIC SPECTACLE LENS**

VERFAHREN ZUR BEREITSTELLUNG EINES OPTISCHEN SYSTEMS EINES OPHTHALMISCHEN BRILLENGLASES UND VERFAHREN ZUR HERSTELLUNG EINES OPHTHALMISCHEN BRILLENGLASES

PROCÉDÉ POUR FOURNIR UN SYSTÈME OPTIQUE D'UN VERRE DE LUNETTE OPHTALMIQUE ET PROCÉDÉ DE FABRICATION DE VERRE DE LUNETTE OPHTALMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.11.2011 EP 11306503**
**16.11.2011 EP 11306505**

(43) Date of publication of application:
**24.09.2014 Bulletin 2014/39**

(73) Proprietor: **Essilor International (Compagnie Générale d'Optique)**
**94220 Charenton-le-Pont (FR)**

(72) Inventors:
• **MURADORE, Fabien**
**F-94220 Charenton Le Pont (FR)**
• **BROUTIN, Guillaume**
**F-94220 CharentonLe Pont (FR)**
• **COLAS, Pauline**
**F-94220 Charenton Le Pont (FR)**
• **LAKHOUA, Asma**
**F-94220 Charenton Le Pont (FR)**

(74) Representative: **Cabinet Plasseraud**
**66 rue de la Chaussée d'Antin**
**75440 Paris Cedex 09 (FR)**

(56) References cited:
WO-A1-2007/041796     FR-A1- 2 842 308
GB-A- 439 302     US-A- 1 594 059

**Description**

FIELD OF THE INVENTION

The invention relates to a method for providing an optical system of an ophthalmic spectacle lens, a method for manufacturing an ophthalmic spectacle lens, a computer program product and a computer readable medium.

BACKGROUND OF THE INVENTION

Conventionally, spectacles lenses are manufactured on request in accordance with specifications intrinsic to individual wearers. Such specifications generally encompass a medical prescription made by an ophthalmologist.

A wearer may thus be prescribed a positive or negative optical power correction. For presbyopic wearers, the value of the power correction is different for far vision and near vision, due to the difficulties of accommodation in near vision. The prescription thus comprises a far-vision power value and an addition representing the power increment between far vision and near vision. The addition is qualified as prescribed addition. Ophthalmic lenses suitable for presbyopic wearers are multifocal lenses, the most suitable being progressive multifocal lenses.

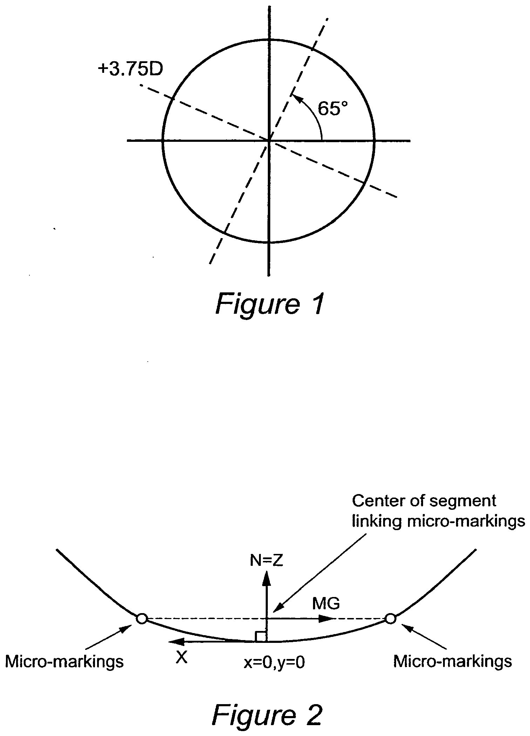

The ophthalmic prescription can include a prescribed astigmatism. Such a prescription is produced by the ophthalmologist in the form of a pair formed by an axis value (in degrees) and an amplitude value (in dioptres). The amplitude value represents the difference between minimal and maximal power in a given direction which enables to correct the visual defect of a wearer. According to the chosen convention, the axis represents the orientation of one of two powers with relation to a reference axis and in the sense of rotation chosen. Usually, the TABO convention is used. In this convention, the reference axis is horizontal and the sense of rotation is anticlockwise for each eye, when looking to the wearer. An axis value of +45° therefore represents an axis oriented obliquely, which when looking to the wearer, extends from the quadrant located up on the right to the quadrant located down on the left. Such an astigmatism prescription is measured on the wearer looking in far vision. The term « astigmatism » is used to designate the pair (amplitude, angle); despite this use not being strictly correct, this term is also used to refer to the amplitude of the astigmatism. The person skilled in the art can understand from the context which meaning is to be considered. It is also known for the person skilled in the art that the prescribed power and astigmatism of a wearer are usually called sphere $SPH_p$, cylinder $CYL_p$ and axis $\gamma_p$. Figure 1 is a schematic illustration of the prescription expressed in TABO referential desired for the left eye of a wearer. The axis of the prescription (65° here) gives the direction of the smallest power which is, in this case, 3.50 Dioptres whereas the highest power is along the direction which is perpendicular to the axis of the prescription and its value corresponds to + 3.50 Dioptres + 0.25 Dioptres = 3.75 Dioptres. The mean power (also called the mean sphere noted $SPH_{mean}$) is the arithmetical average of the smallest power and the highest power and is equal to 3.625 Dioptres. In case a presbyopic wearer is considered, the prescription is made up of a near vision power value and an addition representative of the power increment between the far vision and the near vision. The ophthalmic lenses that offset presbyopia are multifocal lenses, the most adapted being progressive multifocal lenses.

Based on the knowledge of the specifications intrinsic to individual wearers, optical or ophthalmic lenses can be prepared. The process of preparing ophthalmic lenses begins with an unfinished or semi-finished glass or polished optical lens. Such lens is commonly called "semi-finished" or "blank" the terms meaning the same in the remainder of the description. Typically, the lens blank has a first finished surface and a second unfinished surface. By grinding away material from the second surface of the blank, a required corrective prescription is generated. Thereafter, the surface having had said corrective prescription imparted thereto is polished. The peripheral edge of the processed optical lens is then provided with a final desired contour so as to establish a finished ophthalmic lens.

Lenses are commonly manufactured by using a limited number of semi-finished lens blanks. The common trend is to limit the number of semi-finished lens blanks in order to minimize the stocking costs and inventory requirements.

According to commonly used methods, a semi-finished lens is chosen with a given front surface and the back surface is machined so as to obtain a lens according to wearer's prescription data.

The finished surface of the semi-finished lens is usually either a spherical or an aspherical, or a progressive surface.

SUMMARY OF THE INVENTION

The aim of the present invention is to open new routes in the field of providing optical systems and/or manufacturing ophthalmic spectacle lenses.

This object is achieved with a computer-implemented method for providing an optical system according to claim 1. According to the present invention, the "area mean sphere value" is the mean of the sphere value of all points of the area considered.

According to the present invention, an "optical system" may be represented by the equations or the set of points defining the front and the back surface of an ophthalmic spectacle lens and their relative position.

Preferred embodiments comprise one or more of the following features:

- the contour data defining the periphery of the front surface of the ophthalmic spectacle lens is a contour data of a reference frame outline;
- the contour data defining the periphery of the front surface of the ophthalmic spectacle lens is a contour data measured for a given spectacle lens frame;
- defining the back surface and its relative position with relation to the front surface by using the wearer's prescription data and the front surface comprises the sub-steps of:

    - providing a progressive lens design;
    - choosing a calculation point in the first surface, the calculation point having a mean sphere value;
    - defining a virtual spherical front surface having a constant mean sphere value equal to the mean sphere value of the calculation point; and
    - calculating the back surface so as to fulfil the requirements of the wearer's prescription and the provided progressive lens design when combined with the virtual spherical front surface;

- defining the back surface and its relative position with relation to the front surface by using the wearer's prescription data and the front surface comprises a step of optimization, in worn conditions, of the second surface;
- the first surface is devoid of a rotationally symmetrical axis;
- a line of 20 mm length is inscribable within at least a peripheral area;
- each point can be located by its coordinates on a first and a second reference axis and the location of one reference point, the first and the second reference axis and the reference point defining a reference plane;
- the difference between the area mean sphere values of the main area and a peripheral area is comprised in absolute value between 0.1 dioptre and 2 dioptres, preferably at least 0.25 dioptre and or less than 1 dioptre;
- the area mean sphere value of the first peripheral area is superior to the area mean sphere value of the main area while the area mean sphere value of the second peripheral area is inferior to the area mean sphere value of the main area; and
- the difference between the area mean sphere value of the first peripheral area and the area mean sphere value of the main area is equal in absolute value to the difference between the area mean sphere value of the second peripheral area and the area mean sphere value of the main area.

The invention also proposes a method for manufacturing an ophthalmic spectacle lens according to wearer's prescription data and wearer's optical needs, wherein the ophthalmic spectacle lens is based on an optical system according to any of the different embodiments of the preceding methods and the method comprises a step of machining the unfinished lens blank surface so as to provide the back surface of the ophthalmic lens.

Preferred embodiments of the method for manufacturing an ophthalmic spectacle lens comprise a step of further edging the ophthalmic spectacle lens according to the contour data.

Furthermore, the invention also relates to a computer program product comprising one or more stored sequence of instructions that is accessible to a processor and which, when executed by the processor, causes the processor to carry out the steps of the different embodiments of the preceding methods.

The invention also proposes a computer readable medium carrying out one or more sequences of instructions of the preceding computer program product.

Semi-finished lens blanks of the prior art that resemble the optical structure of the semi-finished lens blanks provided in the method of the invention, with different areas of optical features, are those of documents US1594059A, GB439302A, WO2007/041796A1 and FR2842308.

BRIEF DESCRIPTION OF THE DRAWINGS

Further features and advantages of the invention will appear from the following description of embodiments of the invention, given as non-limiting examples, with reference to the accompanying drawings listed hereunder:

- Figure 1 shows a schematic illustration of the prescription desired for the left eye of a wearer expressed in TABO convention;
- Figures 2 and 3 show referential defined with respect to micro-markings, for a surface bearing micro-markings and for a surface not bearing the micro-markings respectively;
- Figures 4 and 5 show diagrammatically, optical systems of eye and lens;
- Figure 6 shows a ray tracing from the centre of rotation of the eye;

- Figure 7 shows an exemplary flowchart of an example of method for providing an optical system of an ophthalmic lens for a specific application according to the invention;
- Figure 8 shows an example of first surface for a semi-finished spectacle lens blank;
- Figure 9 shows an example of first surface of a semi-finished spectacle lens blank type;
- Figure 10 shows an example of first surface according to a first embodiment of the semi-finished spectacle lens blank type of figure 9;
- Figures 11, 12 and 13 illustrate examples of chosen location for edging the semi-finished spectacle lens blank of figure 10;
- Figures 14, 15 and 16 correspond respectively to an evolution of mean sphere, a mean sphere and cylinder maps for an example of blank according to the invention; and
- Figures 17, 18 and 19 correspond respectively to an evolution of mean sphere, a mean sphere and cylinder maps for another example of blank according to the invention.

Elements in the figures are illustrated for simplicity and clarity and have not necessarily been drawn to scale. For example, the dimensions of some of the elements in the figure may be exaggerated relative to other elements to help improving the understanding of the embodiments of the present invention.


DETAILED DESCRIPTION OF THE INVENTION

The present invention applies for all kind of semi-finished blanks. Notably, blanks for progressive spectacle lenses and multifocal spectacle lenses are concerned. Complex blanks having a surface with a plurality of radii are also concerned. Furthermore, the method for manufacturing ophthalmic lenses based on the semi-finished lens blank may notably comprise a step for digital surfacing and, in particular a full-back side one.

Furthermore, the invention relies on an overcoming of a technical prejudice. Indeed, according to the prior art, the person skilled in the art manufactures progressive lenses with the progression on the unfinished surface of the semi-finished lens blank, only a spherical or a toric surface being manufactured on the finished surface. As this technique revealed to be advantageous, the person skilled would not have considered semi-finished spectacle lens blanks with more sophisticated surface on the finished surface. Indeed, according to his beliefs, a more sophisticated semi-finished spectacle lens blanks would result in a greater number of semi-finished spectacle lens blanks in the usual set of spectacle lens blanks. The usual set of spectacle lens blanks encompasses the semi-finished spectacle lens blanks needed to generate all the ophthalmic spectacle lenses usually manufactured. A greater number of semi-finished spectacle lens blanks is not desired, notably for facilitating stock control.

Therefore, the person skilled in the art would not have carried out experiments and tests to search for more sophisticated semi-finished lens blanks and a new method for manufacturing ophthalmic lenses based on these sophisticated semi-finished lens blanks as the Applicant did for the present invention with the unexpected effect that fewer semi-finished lens blanks are needed.

Before further detailing the method for providing an optical system OS of an ophthalmic spectacle lens considered in the present application, several terms used in the remainder of the description will be defined below.

As is known, a minimum curvature $CURV_{min}$ is defined at any point on an aspherical surface by the formula:

$$CURV_{min} = \frac{1}{R_{max}}$$

where $R_{max}$ is the local maximum radius of curvature, expressed in meters and $CURV_{min}$ is expressed in dioptres.

Similarly, a maximum curvature $CURV_{max}$ can be defined at any point on an aspheric surface by the formula:

$$CURV_{max} = \frac{1}{R_{min}}$$

where $R_{min}$ is the local minimum radius of curvature, expressed in meters and $CURV_{max}$ is expressed in dioptres.

It can be noticed that when the surface is locally spherical, the local minimum radius of curvature $R_{min}$ and the local maximum radius of curvature $R_{max}$ are the same and, accordingly, the minimum and maximum curvatures $CURV_{min}$ and $CURV_{max}$ are also identical. When the surface is aspherical, the local minimum radius of curvature $R_{min}$ and the local maximum radius of curvature $R_{max}$ are different.

From these expressions of the minimum and maximum curvatures $CURV_{min}$ and $CURV_{max}$, the minimum and maximum spheres labeled $SPH_{min}$ and $SPH_{max}$ can be deduced according to the kind of surface considered.

When the surface considered is the object side surface, the expressions are the following:

$$SPH_{min} = (n-1) * CURV_{min} = \frac{n-1}{R_{max}} \text{ and } SPH_{max} = (n-1) * CURV_{max} = \frac{n-1}{R_{min}}$$

where n is the index of the constituent material of the spectacle lens or of the semi-finished spectacle lens blank.
If the surface considered is an eyeball side surface, the expressions are the following:

$$SPH_{min} = (1-n) * CURV_{min} = \frac{1-n}{R_{max}} \text{ and } SPH_{max} = (1-n) * CURV_{max} = \frac{1-n}{R_{min}}$$

where n is the index of the constituent material of the spectacle lens or of the blank.
As it is known, a mean sphere $SPH_{mean}$ at any point on an aspherical surface can also be defined by the formula:

$$SPH_{mean} = \frac{1}{2}(SPH_{min} + SPH_{max})$$

The expression of the mean sphere therefore depends on the surface considered:

- if the surface is the object side surface, $SPH_{mean} = \frac{n-1}{2}\left(\frac{1}{R_{min}} + \frac{1}{R_{max}}\right)$

- if the surface is an eyeball side surface, $SPH_{mean} = \frac{1-n}{2}\left(\frac{1}{R_{min}} + \frac{1}{R_{max}}\right)$

- A cylinder CYL is also defined by the formula $CYL = |SPH_{max} - SPH_{min}|$.

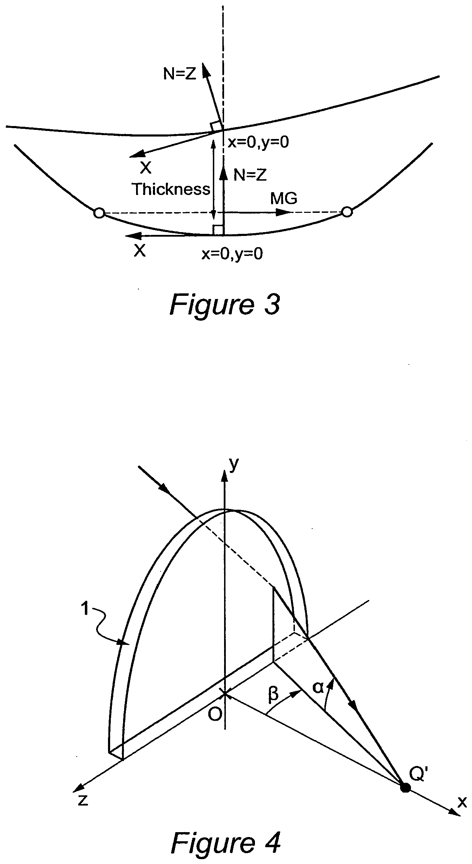

The characteristics of any aspherical face of the lens may be expressed by means of the local mean spheres and cylinders. A surface can be considered as locally aspherical when the cylinder is at least 0.25 Dioptre.
A surface may thus be locally defined by a triplet constituted by the maximum sphere $SPH_{max}$, the minimum sphere $SPH_{min}$ and the cylinder axis. Alternatively, the triplet may be constituted by the mean sphere $SPH_{mean}$, the cylinder CYL and the cylinder axis.
Whenever a lens is characterized by reference to one of its aspherical surfaces, a referential is defined with respect to micro-markings as illustrated in figures 2 and 3, for a surface bearing micro-markings and for a surface not bearing the micro-markings respectively. As an example the case of progressive lenses will be considered.
Progressive lenses comprise micro-markings that have been made mandatory by a harmonized standard ISO 8990-2. Temporary markings may also be applied on the surface of the lens, indicating positions of control points on the lens, such as a control point for far vision, a control point for near vision, a prism reference point and a fitting cross for instance. If the temporary markings are absent or have been erased, it is always possible for a skilled person to position the control points on the lens by using a mounting chart and the permanent micro-markings.
The micro-markings also make it possible to define referential for both surfaces of the lens.
Figure 2 shows the referential for the surface bearing the micro-markings. The centre of the surface (x=0, y=0) is the point of the surface at which the normal N to the surface intersect the centre of the segment linking the two micro-markings. MG is the collinear unitary vector defined by the two micro-markings. Vector Z of the referential is equal to the unitary normal (Z = N); vector Y of the referential is equal to the vector product of Z by MG; vector X of the referential is equal to the vector product of Y by Z. {X, Y, Z} thereby form a direct orthonormal trihedral. The centre of the referential is the centre of the surface whose coordinates are x = 0mm, y = 0 mm. The X axis is the horizontal axis and the Y axis is the vertical axis as it shown in Figure 4.
Figure 3 shows the referential for the surface opposite to the surface bearing the micro-markings. The centre of this second surface (x = 0, y = 0) is the point at which the normal N intersecting the centre of the segment linking the two micro-markings on the first surface intersects the second surface. Referential of the second surface is constructed the same way as the referential of the first surface, i.e. vector Z is equal to the unitary normal of the second surface; vector Y is equal to the vector product of Z by MG; vector X is equal to the vector product of Y by Z.
Similarly, on a semi-finished spectacle lens blank, standard ISO 10322-2 requires micro-markings to be applied.

The centre of the aspherical surface of a semi-finished spectacle lens blank can therefore be determined as well as a referential as described above. In other words, this means that each point of the finished surface of a semi-finished spectacle lens blank can be located thank to its coordinates on a first and a second reference axis and the location of one reference point.

Obtaining a determination of each point of the finished surface of a semi-finished spectacle lens blank is an objective which may be reached using different ways. As example, several one of these ways will be detailed in the following of the description.

The semi-finished spectacle lens blank may have a centre, such centre being for instance obtainable by the specific geometry of the spectacle lens blank. In such situation, the reference point may be the centre of the spectacle lens blank.

The semi-finished spectacle lens blank may further comprise an edge between the two surfaces, the edge enabling to obtain the first axis and one reference point. In a specific embodiment, as illustration, if the spectacle lens blank is along an axis (case of a globally cylindrical spectacle lens blank), the centre may be the intersection between this axis and the first surface.

In addition, the second reference axis is obtained from the first reference axis. For instance, the second reference axis may be chosen to be perpendicular to the first reference axis.

The semi-finished spectacle lens may also be adapted for enabling a person skilled in the art to obtain first reference axis. Many methods may be considered for ensuring that the first reference axis be accessible by the optician in his laboratory. Several ones will be detailed in the present application.

The variation of transmitted light from the first surface in a reflexion scheme may be measured. Indeed, the measurement of the transmitted light enables to obtain information regarding the first surface.

The position of the first reference axis may also be based on marker present on the semi-finished spectacle lens blank. Such marker may be temporary markings, markings which may be different from the marking imposed by the standards, notches, markings appearing in presence of mist on the finished surface of the semi-finished spectacle lens blank.

The use of a dedicated pattern may be considered. For instance, the pattern may provide with a given form only when the semi-finished spectacle lens blank is orientated perpendicular to the first axis.

A datasheet may also be provided for enabling to locate the first reference axis.

Another way is to probe the first surface with a probe. Analyzing the result provided by the probe enables to orientate the first surface with regards to a given axis.

In the remainder of the description, it will be considered that the first and the second reference axis and the reference point define a reference plane. For the sake of clarity and simplicity, it will be considered in the remainder of the description that the reference plane corresponds to the plane from which only the first surface is visible for viewer located in front of the lens blank.

In addition to the surface characteristics explained above, an ophthalmic spectacle lens may also be defined by optical characteristics, taking into consideration the situation of the person wearing the lenses.

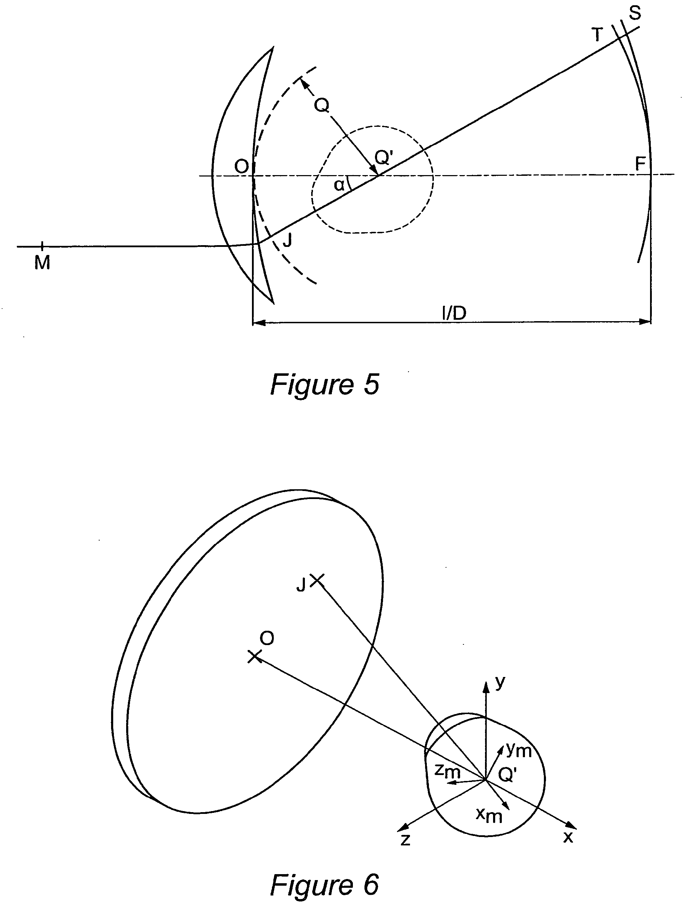

Figures 4 and 5 are diagrammatic illustrations of optical systems of eye and lens, thus showing the definitions used in the description. More precisely, figure 6 represents a perspective view of such a system illustrating parameters $\alpha$ and $\beta$ used to define a gaze direction. Figure 6 is a view in the vertical plane parallel to the antero-posterior axis of the wearer's head and passing through the centre of rotation of the eye in the case when the parameter $\beta$ is equal to 0.

The centre of rotation of the eye is labeled Q'. The axis Q'F', shown on figure 5 in a dot-dash line, is the horizontal axis passing through the centre of rotation of the eye and extending in front of the wearer - that is the axis Q'F' corresponding to the primary gaze view. This axis cuts the aspherical surface of the lens on a point called the fitting cross, which is present on lenses to enable the positioning of lenses in a frame by an optician. The point of intersection of the rear surface of the lens and the axis Q'F' is the point O. O can be the fitting cross if it is located on the rear surface. An apex sphere, of centre Q', and of radius q', which is tangential to the rear surface of the lens in a point of the horizontal axis. As examples, a value of radius q' of 25.5 mm corresponds to a usual value and provides satisfying results when wearing the lenses.

A given gaze direction - represented by a solid line on figure 4 - corresponds to a position of the eye in rotation around Q' and to a point J of the apex sphere; the angle $\beta$ is the angle formed between the axis Q'F' and the projection of the straight line Q'J on the horizontal plane comprising the axis Q'F'; this angle appears on the scheme on Figure 4. The angle $\alpha$ is the angle formed between the axis Q'J and the projection of the straight line Q'J on the horizontal plane comprising the axis Q'F'; this angle appears on the scheme on figures 4 and 5. A given gaze view thus corresponds to a point J of the apex sphere or to a couple $(\alpha, \beta)$. The more the value of the lowering gaze angle is positive, the more the gaze is lowering and the more the value is negative, the more the gaze is rising.

In a given gaze direction, the image of a point M in the object space, located at a given object distance, is formed between two points S and T corresponding to minimum and maximum distances JS and JT, which would be the sagittal and tangential local focal lengths. The image of a point in the object space at infinity is formed, at the point F'.

The distance D corresponds to the rear frontal plane of the lens.

Ergorama is a function associating to each gaze direction the usual distance of an object point. Typically, in far vision following the primary gaze direction, the object point is at infinity. In near vision, following a gaze direction essentially corresponding to an angle $\alpha$ of the order of 35° and to an angle $\beta$ of the order of 5° in absolute value towards the nasal side, the object distance is of the order of 30 to 50 cm. For more details concerning a possible definition of an ergorama, US patent US-A-6,318,859 may be considered. This document describes an ergorama, its definition and its modeling method. For a method of the invention, points may be at infinity or not. Ergorama may be a function of the wearer's ametropia.

Using these elements, it is possible to define a wearer optical power and astigmatism, in each gaze direction. An object point M at an object distance given by the ergorama is considered for a gaze direction $(\alpha, \beta)$. An object proximity ProxO is defined for the point M on the corresponding light ray in the object space as the inverse of the distance MJ between point M and point J of the apex sphere:

$$\text{ProxO} = 1/MJ$$

This enables to calculate the object proximity within a thin lens approximation for all points of the apex sphere, which is used for the determination of the ergorama. For a real lens, the object proximity can be considered as the inverse of the distance between the object point and the front surface of the lens, on the corresponding light ray.

For the same gaze direction $(\alpha, \beta)$, the image of a point M having a given object proximity is formed between two points S and T which correspond respectively to minimal and maximal focal distances (which would be sagittal and tangential focal distances). The quantity Prox I is called image proximity of the point M:

$$\mathrm{Pr}oxI = \frac{1}{2}\left(\frac{1}{JT} + \frac{1}{JS}\right)$$

By analogy with the case of a thin lens, it can therefore be defined, for a given gaze direction and for a given object proximity, i.e. for a point of the object space on the corresponding light ray, an optical power Pui as the sum of the image proximity and the object proximity.

$$Pui = \mathrm{Pr}oxO + \mathrm{Pr}oxI$$

With the same notations, an astigmatism Ast is defined for every gaze direction and for a given object proximity as:

$$Ast = \left|\frac{1}{JT} - \frac{1}{JS}\right|$$

This definition corresponds to the astigmatism of a ray beam created by the lens. It can be noticed that the definition gives, in the primary gaze direction, the classical value of astigmatism. The astigmatism angle, usually called axis, is the angle $\gamma$. The angle $\gamma$ is measured in the frame $\{Q', x_m, y_m, z_m\}$ linked to the eye. It corresponds to the angle with which the image S or T is formed depending on the convention used with relation to the direction $z_m$ in the plane $\{Q', z_m, y_m\}$.

Possible definitions of the optical power and the astigmatism of the lens, in the wearing conditions, can thus be calculated as explained in the article by B. Bourdoncle et al., entitled "Ray tracing through progressive ophthalmic lenses", 1990 International Lens Design Conference, D.T. Moore ed., Proc. Soc. Photo. Opt. Instrum. Eng. Standard wearing conditions are to be understood as the position of the lens with relation to the eye of a standard wearer, notably defined by a pantoscopic angle of -8°, a lens-pupil distance of 12 mm, a pupil-eye rotation centre of 13.5 mm and a wrap angle of 0°. The pantoscopic angle is the angle in the vertical plane between the optical axis of the spectacle lens and the visual axis of the eye in the primary position, usually taken to be the horizontal. The wrap angle is the angle in the horizontal plane between the optical axis of the spectacle lens and the visual axis of the eye in the primary position, usually taken to be the horizontal. Other conditions may be used. Wearing conditions may be calculated from a ray-tracing program, for a given lens. Further, the optical power and the astigmatism may be calculated so that the prescription is either fulfilled at the reference points (i.e. control points in far vision) and for a wearer wearing his spectacles in the wearing conditions or measured by a frontofocometer.

Figure 6 represents a perspective view of a configuration wherein the parameters $\alpha$ and $\beta$ are non zero. The effect of rotation of the eye can thus be illustrated by showing a fixed frame $\{x, y, z\}$ and a frame $\{x_m, y_m, z_m\}$ linked to the eye. Frame $\{x, y, z\}$ has its origin at the point Q'. The axis x is the axis Q'O and it is orientated from the lens towards the eye. The y axis is vertical and orientated upwardly. The z axis is such that the frame $\{x, y, z\}$ be orthonormal and direct. The frame $\{x_m, y_m, z_m\}$ is linked to the eye and its centre is the point Q'. The $x_m$ axis corresponds to the gaze direction JQ'. Thus, for a primary gaze direction, the two frames $\{x, y, z\}$ and $\{x_m, y_m, z_m\}$ are the same. It is known that the properties for a lens may be expressed in several different ways and notably in surface and optically. A surface characterization is thus equivalent to an optical characterization. In the case of a blank, only a surface characterization may be used. It has to be understood that an optical characterization requires that the lens has been machined to the wearer's prescription. In contrast, in the case of an ophthalmic lens, the characterization may be of a surface or optical kind, both characterizations enabling to describe the same object from two different points of view. Whenever the characterization of the lens is of optical kind, it refers to the ergorama-eye-lens system described above. For simplicity, the term 'lens' is used in the description but it has to be understood as the 'ergorama-eye-lens system'. The value in surface terms can be expressed with relation to points. The points are located with the help of abscissa or ordinate in a frame as defined above with respect to figures 3, 5 and 6.

The values in optic terms can be expressed for gaze directions. Gaze directions are usually given by their degree of lowering and azimuth in a frame whose origin is the centre of rotation of the eye. When the lens is mounted in front of the eye, a point called the fitting cross is placed before the pupil or before the eye rotation centre Q' of the eye for a primary gaze direction. The primary gaze direction corresponds to the situation where a wearer is looking straight ahead. In the chosen frame, the fitting cross corresponds thus to a lowering angle $\alpha$ of 0° and an azimuth angle $\beta$ of 0° whatever surface of the lens the fitting cross is positioned - rear surface or front surface.

The above description made with reference to figures 4 to 6 was given for central vision. In peripheral vision, as the gaze direction is fixed, the centre of the pupil is considered instead of centre of rotation of the eye and peripheral ray directions are considered instead of gaze directions. When peripheral vision is considered, angle $\alpha$ and angle $\beta$ correspond to ray directions instead of gaze directions.

In the remainder of the description, terms like « up », « bottom », « horizontal », « vertical », « above », « below », or other words indicating relative position may be used. These terms are to be understood in the wearing conditions of the lens. Notably, the "upper" part of the lens corresponds to a negative lowering angle $\alpha$ <0° and the "lower" part of the lens corresponds to a positive lowering angle $\alpha$ >0°. Similarly, the "upper" part of the surface of a lens - or of a semi-finished lens blank - corresponds to a positive value along the y axis, and preferably to a value along the y axis superior to the y_value at the fitting cross and the "lower" part of the surface of a lens - or of a semi-finished lens blank - corresponds to a negative value along the y axis in the frame as defined above with respect to figures 2 and 3, and preferably to a value along the y axis inferior to the y_value at the fitting cross.

In the frame of the present invention and according to ISO Standard 13666:1998(E/F) (Ophthalmic optics - Spectacle lenses - Vocabulary), the curvature of the front face is called a "base-curve".

The base-curves are usually expressed referring to a standard refraction index of 1.53, whereas other refraction index may also be used to refer and express base-curves.

The front face of a semi-finished lens blank is usually intended to be the final front surface of the final lens and the other face is machined so as the optical system of the final lens fits the wearer ophthalmic prescriptions. Some minor machining of the front face may occur, but without modifying its curvature.

Semi-finished lens blanks are usually obtained by injection moulding or by casting into moulds. They also can be produced by machining a blank.

Manufacturers typically produce a series of semi-finished lens blanks, each having its own base curve. This "base-curve series" is a system of semi-finished lens blanks that front faces increase incrementally in curvature (e.g., + 0.50 Dioptres, + 2.00 Dioptres, + 4.00 Dioptres and so on).

The front surface of a semi-finished lens blank of a base-curve series serves as the starting point from which the optical surface of the back surface will be calculated and the final lens be manufactured according to a wearer prescription (or focal power).

The front surfaces of the semi-finished lens blanks of a "base-curve series" may be spheres, aspheric surfaces, progressive addition surfaces.

As for an example, progressive addition lenses (PAL) may be manufactured thanks to semi-finished lens blanks with spherical or aspheric front surfaces and the progressive addition surface is machined to form the rear face of the final lens. They can also be manufactured thanks to semi-finished lens blanks with progressive addition surfaces and the rear face of the blank is machined so as to form a spherical or toric surface. It is also possible to manufacture PAL thanks to semi-finished lens blanks with progressive addition surfaces and to machine the rear face of the lens blank so as to obtain a second progressive addition surface and provide "dual add" PAL.

Each base-curve in a series is conventionally used for producing a range of prescription, as specified by the manufacturer. Manufacturers use base-curve selection charts that provide the recommended prescription ranges for each base-curve in the series. An example of a typical base-curve selection chart is disclosed in patent document US 6,948,816 where the base-curve series of figures 23 A to C comprises five base-curves. The selection chart indicates the unique base-curve to be chosen according to a given prescription as a function of the spherical power SPH and of the cylindrical power CYL for curing an astigmatic vision. The disclosed selection chart relates to progressive addition lenses (PAL) in which a power continuously changes between a distance portion and a near portion. The same type of selection chart is widely used for every kind of ophthalmic lenses such as for example single vision lenses (spherical and/or torical), bi-focal lenses, aspherical lens, PAL.

The invention relates to a method for providing an optical system OS of an ophthalmic spectacle lens based on a semi-finished lens blank according to wearer's optical needs and wearer's prescription data.

For instance, the wearer's optical needs are to have an ophthalmic lens suitable for specific applications as computer activity, stairs climbing, reading in bed for seniors, limiting ocular tiredness, do-it-yourself activity...

For example, the wearer's optical needs are to have an enhanced or a lowered optical power in the top or in the bottom of the ophthalmic lens, an enhanced image angular visual field in central vision or peripheral vision of the ophthalmic lens, a lowered prismatic deviation in peripheral vision or in central vision of the ophthalmic lens, and/or an enhanced magnification in central or peripheral vision of the ophthalmic lens.

In the scope of the present invention, the aforementioned terms are understood according to the following definitions:

-   Central vision (also referred as foveolar vision) describes the work of the fovea, a small area in the centre of the retina that contains a rich collection of cones. In a central vision situation, an observer looks at an object which stays in a gaze direction and the fovea of the observer is moved to follow the object. Central vision permits a person to read, drive, and perform other activities that require fine and sharp vision;
-   Peripheral vision describes the ability to see objects and movement outside of the direct line of vision. In a peripheral vision situation, an observer looks in a fixed gaze direction and an object is seen out of this direct line of vision. The direction of a ray coming from the object to the eye is then different from the gaze direction and is referred as peripheral ray direction. Peripheral vision is the work of the rods, nerve cells located outside the fovea of the retina;
-   Image visual angular field in central vision in the image space (eye space) is defined for a determined and fixed object visual angular field in central vision in the object space, as the angular portion scanned by the eye to visualize the visual angular field in the object space;
-   Image visual angular field in peripheral vision is defined for a determined and fixed peripheral object visual angular field as the corresponding angular portion in the image space viewed by the peripheral vision of the eye;
-   Prismatic deviation is defined in the object space by the angular deviation of a ray issued from the centre of the entrance pupil introduced by the quantity of prism of the lens; and
-   Magnification is defined as the ratio between the apparent angular size (or the solid angle) of an object without lens and the apparent angular size (or the solid angle) of an object seen through the lens.

The optical system OS of an ophthalmic spectacle lens is defined by at least a front surface S1 and a back surface S2 and their relative position according to 3D coordinates and for a given refractive index.

For example, the optical system is a data file comprising the equations defining the front surface S1 and the back surface S2 of the ophthalmic spectacle lens, or a set of points, each having a mean sphere value and a cylinder value, defining the back and front surfaces and the position of the 3D contour in the semi-finished lens blank used to manufacture the ophthalmic spectacle lens.

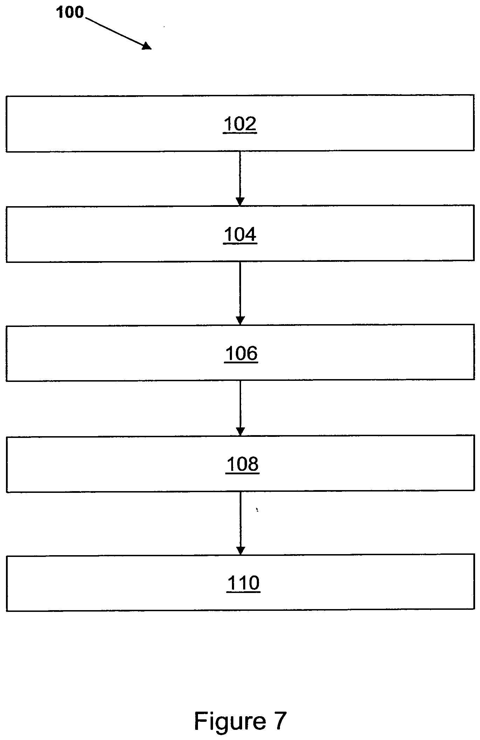

Figure 7 is an exemplary flowchart of an example of method 100 for providing an optical system OS of an ophthalmic spectacle lens according to wearer's prescription data and wearer's optical needs with the provision that a wearer's optical need is not related to prescription data according to the invention.

The method 100 for providing an optical system OS comprises a step 102 of providing a semi-finished lens blank SB. The semi-finished lens blank SB comprises a first surface SB1 having in each point a mean sphere value $SPH_{mean}$ and a cylinder value CYL, and a second unfinished surface SB2.

The first surface SB1 of said blank comprises a plurality of areas of localized optical features LOF1, LOF2...

The localized optical features LOF of an area of a surface give a sensibly constant optical feature on the whole said area when combined with a sphere. The area of localized optical features LOF is an area having a constant mean sphere value $SPH_{mean}$ or an area having a constant mean sphere value $SPH_{mean}$ and a constant cylinder value CYL.

According to a third variant, the area of localized optical features LOF is an area with a surface treatment, such as a colour surface treatment, a filtering surface treatment, for example a selective transmission treatment.

The location of the areas as well as their number and their form are parameters that can be optimized to provide a good trade-off between bringing additional interesting optical functions to the wearer and avoiding introducing too much disturbance in the optical correction linked to the prescription.

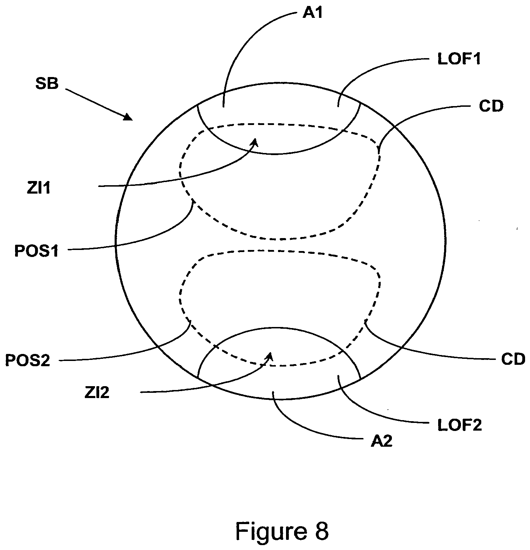

An example of such a first surface SB1 of a semi-finished lens blank SB is shown in figure 8. According to this view, the first surface of blank SB1 comprises two areas of localized optical features: a first area A1 of a localized optical feature LOF1 and a second area A2 of a localized optical feature LOF2.

Furthermore, the method 100 comprises a step 104 of providing contour data CD defining the periphery of the front surface S1 of the ophthalmic spectacle lens. The said contour data is inscribable within the first surface of the blank SB1, i.e. the contour data is capable of being inscribed in the first surface of the blank SB1. By the term "inscribable", it should be understood that the projection of first surface SB1 onto the reference plane encompasses the said contour data.

According to an embodiment, the section of the semi-finished lens blank is a disk. As for an example, the diameter of said disk is 80 mm.

The contour data CD defining the periphery of the front surface S1 of the ophthalmic spectacle lens is a contour data of a reference frame outline.

For example, the reference frame outline may be a mean frame outline representative of the different frames sold in the market or the specific frame chosen by the wearer. For instance, the mean frame outline may be chosen to encompass all the existing frames. The dimensions of the mean frame outline are 5 cm $\times$ 3 cm, for example.

According to a variant, the contour data CD defining the periphery of the front surface S1 of the ophthalmic spectacle lens is a contour data measured for a given spectacle lens frame, for instance the frame chosen by the wearer.

Moreover, the method 100 for providing the optical system OS comprises a step 106 of choosing at least one localized optical feature labelled LOFi suitable for the wearer's needs.

Furthermore, the method 100 comprises a step 108 of positioning the contour data CD provided at step 104 with relation to the first surface of the blank SB1 so that the front surface S1 comprises a zone ZIi intersecting the areas of the localized optical features chosen at step 106.

In the case illustrated in figure 8, a contour data CD is illustrated on figure 8 by the positions POS1 and POS2 represented in dotted line. For the position labelled POS1, the front surface S1 will comprise the zone ZI1 intersecting the area A1 of the localized optical feature LOF1 if this localized optical feature has been chosen.

For the other position labelled POS2 of the contour data CD corresponding to the choice of the localized optical feature LOF2, the front surface S1 will comprise the zone ZI2 intersecting with the area A2 of the localized optical feature LOF2.

Moreover, the method 100 for providing the optical system OS comprises a step 110 of defining the back surface S2 and its relative position with the front surface S1 by using the wearer's prescription data and the front surface S1.

According to a first embodiment, the step 110 of defining the back surface S2 and its relative position with relation to the front surface S1 comprises a sub-step of choosing a calculation point in the first surface SB1.

Preferably, the calculation point is chosen in a zone of the first surface SB1 outside the areas of localised optical features LOF. According to a variant, the calculation point is chosen within an area of localised optical features LOF and preferably an area substantially situated in the centre of the blank. According to another variant, the chosen calculation point is the prism reference point of the final lens.

Then, the step 110 comprises sub-steps for calculating the mean sphere value, the cylinder value and the axis of said cylinder at the point on the back surface S2 corresponding to the calculation point of the front surface S1 so as to fulfil the requirements of the wearer's prescription at said point and for building the back surface S2 with said calculated mean sphere value, cylinder value and axis of said cylinder in each surface point.

Thanks to this first embodiment, the wearer can be provided with a lens where his prescription requirements are fulfilled at the calculation point, and usually in a zone around said point and take advantage of the localized optical features of the front face of the semi-finished lens.

According to a second embodiment, the step 110 of defining the back surface S2 and its relative position with relation to the front surface S1 by using the wearer's prescription data and the front surface S1 comprises a sub-step for providing a progressive lens design. In the frame of the present invention, a "design" of an ophthalmic spectacle lens has to be understood as the part of the optical system of said lens which is not determined by the wearer standard prescription parameters consisting of sphere, cylinder, axis and power addition values determined for said wearer. The wording "design" relates thus to the optical function that results from the aberrations repartition according to different gaze directions passing through the Eye Rotation Centre of the wearer. Astigmatism gradient can be considered as being an example of an indicator related to the aberrations repartition.

Then, the step 110 comprises a sub-step for choosing a calculation point Pc in the first surface SB1, the calculation point having a mean sphere value noted $SPH_{Pc}$.

Moreover, the step 110 comprises a sub-step for defining a virtual spherical front surface VFS having a constant mean sphere value equal to the mean sphere value of the calculation point $SPH_{Pc}$.

Furthermore, this sub-step is followed by a sub-step for calculating the back surface S2 so as to fulfil the requirements of the wearer's prescription and the provided progressive lens design when combined with the virtual spherical front surface VFS.

Thanks to this second embodiment, the wearer can be provided with a progressive lens where his prescription requirements are fulfilled at the calculation point, and usually in a zone around said point and take advantage of the localized optical features of the front face of the semi-finished lens.

According to a third embodiment, the step 110 of defining the back surface S2 and its relative position with relation to the front surface S1 by using the wearer's prescription data and the front surface S1 can comprise a step of optimization, in worn conditions, of the second surface S2, preferably using as a target the wearer's prescription. Said step of optimization may be useful in order to reduce unwanted astigmatism of the final lens.

The method 100 previously described is particularly advantageous in the case of a lens blank provided with several areas with several base-curves.

It is therefore proposed to apply the method to a semi-finished spectacle lens blank type where the semi-finished lens blank comprises a first surface sb1 having in each point a mean sphere value $sph_{mean}$ and a cylinder value cyl and a second unfinished surface.

First surface SB1 comprises a main area labelled MA and a plurality of peripheral areas labelled Ai. An area should be understood as a set of points of first surface SB1. None of the orthogonal projection of the peripheral areas Ai onto the reference plane encompass partially or totally the orthogonal projection of the main area MA onto the reference plane.

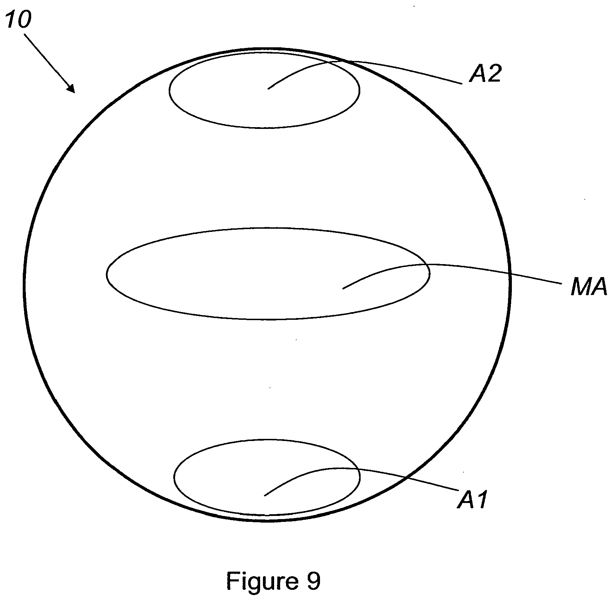

An example of first surface SB1 of a semi-finished spectacle lens blank 10 is illustrated on the schematic view of figure 9. This view is schematic in so far as in reality, it is only a projection onto a plane of first surface S1 which is represented. In the specific case of figure 9, the projection of the surface is a circle since it is the most usual configuration. However, it should be understood that the spectacle lens blank 10 may have any geometrical form. According to the example of figure 9, a main area MA and two peripheral areas A1, A2 are present.

A peripheral area Ai is at least characterized by the fact that it fulfills two properties labeled P1 and P2. Property P1 is relative to the curvature of first surface SB1 and P2 concerns the size of peripheral area Ai.

According to property P1, the mean sphere value $SPH_{mean}$ is substantially constant over the whole peripheral area Ai considered. This means that all points of first surface SB1 belonging to peripheral area Ai have substantially the same mean sphere value. Property P1 can be expressed by a condition C1. According to said condition C1, the mean sphere value $SPH_{mean}$ of each point of the peripheral area Ai is equal to the area mean sphere value of the said peripheral area $SPH_{area,\,Ai}$ plus or minus 0.09 dioptre.

Should the area mean sphere value of a peripheral area Ai be labeled $SPH_{area,Ai}$, condition C1 means that for each point belonging to the peripheral area Ai, its mean sphere value $SPH_{mean}$ fulfills the following relations:

$$SPH_{area,Ai} - 0.09 \text{ Diopter} \leq SPH_{mean} \leq SPH_{area,Ai} + 0.09 \text{ Diopter}$$

It should be understood that other conditions may be chosen for interpreting the term "substantially" in property P1. Such conditions would refer, for instance, to a centred interval of mean sphere values, such as plus or minus 0.05 dioptre, 0.06 dioptre, 0.07 dioptre or 0.08 dioptre. This can be respectively expressed by the following relations:

$$SPH_{area,Ai} - 0.05 \text{ Diopter} \leq SPH_{mean} \leq SPH_{area,Ai} + 0.05 \text{ Diopter}$$

or

$$SPH_{area,Ai} - 0.06 \text{ Diopter} \leq SPH_{mean} \leq SPH_{area,Ai} + 0.06 \text{ Diopter}$$

or

$$SPH_{area,Ai} - 0.07 \text{ Diopter} \leq SPH_{mean} \leq SPH_{area,Ai} + 0.07 \text{ Diopter}$$

or

$$SPH_{area,Ai} - 0.08 \text{ Diopter} \leq SPH_{mean} \leq SPH_{area,Ai} + 0.08 \text{ Diopter}$$

The area mean sphere value of peripheral area Ai, $SPH_{area,Ai}$, may correspond to the mean of the sphere value of all points of the peripheral area considered. This value may also be the mean value of the minimum and maximum mean sphere values reached in the peripheral area Ai.

In the specific cases of figure 9, condition C1 implies that for each point respectively belonging to the peripheral areas A1 and A2, the following relations are fulfilled:

$$SPH_{area},A1 - 0.09\ \delta \leq SPH_{mean} \leq SPH_{area},A1 + 0.09\ \delta$$

$$SPH_{area},A2 - 0.09\ \delta \leq SPH_{mean} \leq SPH_{area},A2 + 0.09\ \delta$$

where $SPH_{area}$,A1 and $SPH_{area}$,A2 are respectively the area mean sphere values of the peripheral areas A1 and A2.

Such condition C1 corresponds to the fact that the mean sphere value is substantially constant over the whole peripheral area considered. This means that a surface SB1 which fulfils such condition C1 related to the mean sphere value fulfills property P1.

In addition to this first property P1 linked to the curvature of first surface SB1, a peripheral area Ai also exhibits a second property P2 related to its size. Indeed, the size of a peripheral area Ai should be large enough for property P1 to be efficient but not too large so that semi-finished spectacle lens blank 10 can include several areas. In relative proportion, figure 9 shows an example of area exhibiting the property P2.

Property P2 may be expressed in various ways. For convenience, this size property P2 will be described by reference to the reference plane previously defined. However, other definitions may be used, and notably definitions implying to consider the surface geometry in three dimensions.

It is proposed that each peripheral area Ai is furthermore at least characterized by the fact that its dimensions are such that a 5 mm diameter circle, and preferably a 10 mm diameter circle, is inscribable within said peripheral area Ai. By the term "inscribable", it should be understood that the projection of peripheral area Ai onto the reference plane encompasses a 5 mm diameter circle. Such definition enables to obtain an appropriate size for peripheral area Ai. Another way of expressing property P2 is the fact that a line of 5 mm length is included in the orthogonal projection of said peripheral area Ai onto the reference plane and that the area of the orthogonal projection of said area Ai onto the reference plane is superior to the area of a 5 mm diameter circle.

Preferably, the peripheral areas Ai dimensions may be such that a 10 mm diameter circle is inscribable within said peripheral area Ai. This enables to obtain larger peripheral areas Ai which enables to benefit more easily from the constant mean sphere value of the peripheral areas Ai.

According to a variant, a line of 20 mm length is inscribable within at least one peripheral area.

An area which fulfills the properties P1 and P2 is thus an area of a significant size with a constant mean sphere value. "Significant" means the size fulfills the trade-off explained for property P2.

First surface SB1 also comprises a main area labelled MA. The main area MA should be understood as a set of points of first surface SB1. Main area MA is at least characterized by the fact that it fulfils three properties, the property P1 linked to curvature as previously described and properties P3 and P4. Properties P3 and P4 concern respectively the size and the position of main area MA.

Thus, the main area MA is firstly at least characterized by the fact that the mean sphere value ($SPH_{mean}$) of each point of the main area MA is equal to the area mean sphere value of the said main area plus or minus 0.09 dioptre. This means that the mean sphere value is substantially constant over the whole main area MA and that each point of first surface SB1 belonging to main area MA has substantially the same mean sphere value.

Property P3 may be expressed in various ways. For convenience, this size property P3 will be described by reference to the reference plane previously defined. However, other definitions may be used, and notably definitions implying to consider the surface geometry in three dimensions.

Secondly, the main area MA is moreover at least characterized by the fact that its dimensions are such that a 20 mm diameter circle is inscribable within said main area MA. Such definition enables to obtain an appropriate size for main area MA. Another way of expressing property P3 is the fact that a line of 20 mm length is included in the orthogonal projection of said main area MA onto the reference plane and that the area of the orthogonal projection of said main area MA onto the reference plane is superior to the area of a 20 mm diameter circle.

Thirdly, the main area MA is at least characterized by the fact that the main area MA encompasses the geometrical centre O of the first surface S1 according to property P4. This may be expressed by the fact that the 20 mm diameter circle inscribable within main area MA is centred at the geometrical centre of the first surface S1.

The first surface S1 also fulfils a property P5 according to which the area mean sphere value of at least a peripheral area Ai is different from the area mean sphere value of the said main area MA. According to this property, blank 10 is provided with at least two areas with different localized optical feature. This can also be expressed as the fact that the lens blank is provided with several areas with several optical features.

Furthermore, in accordance with a property P6, the distance between the at least one peripheral zone Ai and main area MA is superior to 5 mm. The distance is the minimum value of the distance between a point of the peripheral area Ai and a point of main area MA. Usually, the points involved will be points of the periphery of the peripheral primary area and a point of the main area MA. According to this property P6, this implies that the term "peripheral" in the frame of this invention should be interpreted with relation to main area MA. As an alternative, the distance may be superior to 10 mm.

In addition to this combination of previous properties which enables to provide with a semi-finished spectacle lens blank 10 with different base-curves, surface SB1 exhibits a property related to the smoothness of transitions between the different areas. Indeed, if abrupt transitions exist between the areas, the vision of the wearer is greatly disturbed. Such cases should therefore preferably be avoided if one wants to keep the advantages provided by the combination of the previous properties. This means that the mean sphere value is continuously differentiable on the first surface SB1.

The combination of properties P1, P2, P3, P4, P5 and P6 in the same blank enables to provide a more sophisticated blank compared to that a blank with a simple spherical and toric surface. This sophistication enables to provide several base-curves in the same blank. Therefore, as will be further detailed below, the same blank enlarges the number of specific applications (wearer's needs) for which the lens can be manufactured or the number of different prescriptions (prescription data) which can be obtained. In other words, such blank increases flexibility and provides the possibility to manufacture several kinds of lenses starting from the same blank. Thus, such blank enables to minimize the stocking costs and inventory requirements.

The advantages provided by the above suggested blanks will be the most sensitive if a set of blanks comprising several blanks as previously described is provided.

For inventory purposes, it is better if the blanks have the same configuration for the first surface SB1 and are indexed in power value, preferably indexed in difference of sphere between two areas since it facilitates their identification. Other kind of indexation may also be considered.

Such set of spectacle lens blanks may be used in a method for making a lens based on a blank as previously described, the method comprising a step of choosing the most appropriate blank in the set of blanks. The choice may be based on different criteria such as the facility of machining the unfinished surface of the lens blank, the availability of the stock, the price...

Therefore, the methods described previously enable to benefit from the fact the combination of properties P1 to P6 implies that semi-finished spectacle lens blank 10 has at least two areas of localized optical features. Indeed, the location of the contour data can be varied upon the specific need wanted. This will be further illustrated when describing the first embodiment, be it understood that this effect appears on each semi-finished spectacle lens blank 10.

So as to provide semi-finished spectacle lens blank 10 enabling to be adapted for several needs, it may be preferable that the peripheral area cumulate another localized optical feature. Thus, the peripheral area may have a surface treatment, such as a colour surface treatment or a filtering surface treatment.

As an illustration of the advantages of this choice consisting in cumulating several localized optical features on the same semi-finished spectacle lens blank, the difference between the cylinder values in two areas may be based on the providing of a wearer's prescribed astigmatism in near vision and the far vision. Such suggestion is based on the observation that the rotation and the deformation of the elements constituting the eye when the wearer changes from far vision to near vision produce variations of astigmatism. These variations of physiological origin, linked to the deformation of the eye, can be corrected by the lens placed in front of the eye, taking into account the obliquity defects and the variations of the astigmatism, specific to the lens considered, caused by the conditions of sight, in other words by the variations in the object distance between far vision and near vision. The semi-finished spectacle lens blank proposed is relevant as soon as the astigmatism prescribed for in far vision differs from that prescribed for in near vision, whether this is by amplitude, by angle or by amplitude and angle.

In specific cases, the first surface may be a complex one, which implies it is a not rotationally symmetrical aspheric surface.

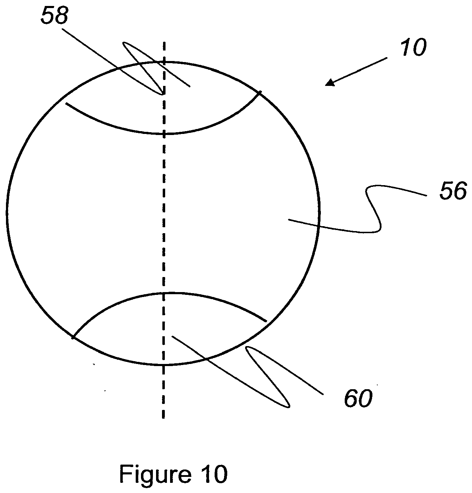

According to an embodiment, semi-finished spectacle lens blank 10 comprises two peripheral areas. An example of such embodiment is illustrated by the scheme of figure 10. As before, figure 10 corresponds to a projection of surface SB1 of semi-finished spectacle lens blank 10 onto the reference plane. In this case, surface SB1 comprises a main area MA labeled 56 and two peripheral areas A1 and A2 labeled 58 and 60. In addition, in the case of figure 10, the distance between main area 56 and two peripheral areas 58 and 60 is superior to 5 mm. The distance between the two peripheral areas 58 and 60 is also superior to 5 mm.

Each peripheral area brings to the blank an area with a localized optical feature. Such area with a localized optical feature can be used in order to fulfil an optical wearer's need while main area may be used so that the final lens fulfils the wearer's prescription in this zone.

Thus, the semi-finished spectacle lens blank 10 proposed provides with the possibility to obtain different lenses suitable for several optical wearer's needs. In other words, the same blank 10 enlarges the number of specific applications (wearer's needs) for which a lens can be manufactured based on the blank. This results in a reduced number of blanks required in a set of lens blanks for generating all usual lenses. Consequently, such semi-finished spectacle lens blank 10 enables to minimize the stocking costs and inventory requirements.

Furthermore, the difference in mean sphere value between the area mean sphere values of main area 56 and a peripheral area is comprised in absolute value between 0.1 dioptre and 2 dioptres.

This variation in mean sphere between the areas is sufficiently weak so that the wearer is not perturbed by the cylinder generated by this variation. In other words, central vision is not disturbed by the addition of peripheral areas while the peripheral areas provide an optical gain. Thus, without taking into account the finished surface in the calculation of the unfinished surface, the same blank 10 enables to obtain different lenses for several activities. In the following, it will be shown that up to seven different lenses may be obtained based on blank 10 as exemplified by Figure 10. Therefore, the number of blanks for generating all usual lenses is divided by seven with relation to prior art. In other words, such blank 10 enables to minimize the stocking costs and inventory requirements.

The difference in mean sphere value between the area mean sphere values of main area 56 and a peripheral area may advantageously be comprised in absolute value between 0.25 dioptre and 1 dioptre. Indeed, in this case, the cylinder generated is even more reduced since the variation in sphere is weaker.

The location of the peripheral areas as well as their number and their form are parameters that can be optimized to provide a good trade-off between bringing additional interesting optical functions to the wearer and avoiding introducing too much disturbance in the optical correction linked to the prescription.

Furthermore, it may be preferred to have a constant mean sphere value in the main area that is the most appropriate for the wearer's ametropy.

In addition, in the example of figure 10, the mean sphere value MS58 of the first peripheral area 58 is superior to the mean sphere value MS56 of the main area 56. In other words, it means that:

$$MS58 = MS56 + \Delta_{MS58-56}$$

with $\Delta_{MS58-56}$ the difference in mean sphere value between the first peripheral area 58 and the main area 56, $\Delta_{MS58-56}$ usually being expressed in dioptres and being positive. As explained before, $\Delta_{MS58-56}$ is comprised between 0.1 and 2 dioptres, preferably between 0.25 and 1 dioptre.

The mean sphere value MS60 of the second peripheral area 60 may be inferior to the mean sphere value MS 56 of the main area 56. In other words, it means that:

$$MS60 = MS56 + \Delta_{MS60-56}$$

with $\Delta_{MS60-56}$ the difference in mean sphere value between the second peripheral area 60 and the main area 56, $\Delta_{MS60-56}$ usually being expressed in dioptres and being negative. As explained before, $\Delta_{MS60-56}$ is comprised between and -2.0 and -0.1 dioptre, preferably between -1 and -0.25 dioptre.

Therefore, in the case of figure 10, the variation in mean sphere values is inverted between the two areas. According to the specific example of figure 10, the difference in mean sphere value between both peripheral areas and the main area may be the same in absolute value. In other words, this implies that $\Delta_{MS60-56} = -\Delta_{MS58-56}$. In addition, for figure 10, the value chosen is preferably 0.5 dioptre.

The advantage of such configuration (a positive difference in mean sphere value for the first peripheral area and a negative difference in mean sphere value for the second peripheral area) may become more apparent by considering the application of a method to semi-finished spectacle lens blank 10 of figure 10, the method being a method for manufacturing a lens according to the method previously described. Such method will be illustrated by the examples below.

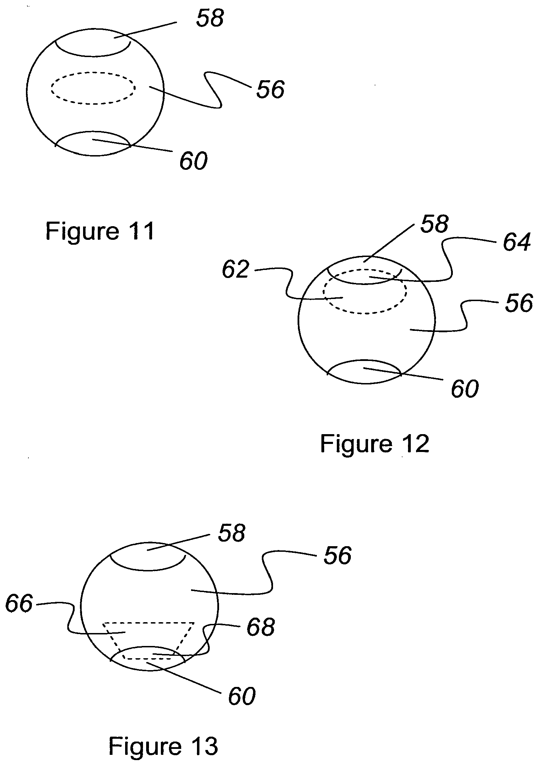

According to the example of figure 11, it is considered to edge semi-finished spectacle lens blank 10 of figure 10 in the main area 56. The location where it is considered to edge blank 10 is shown by a dotted line. The lens obtained depends on the case. A progressive lens can be obtained by manufacturing on the unfinished surface a progressive surface. A single vision lens may also be obtained by machining a sphere or a torus or an aspherical surface on the unfinished surface. Therefore, an area can be rendered progressive thanks to the correction made on the second surface. Single vision lenses are prescribed when the patient is either farsighted or nearsighted and have the same focal power throughout (from top to bottom). It is thus possible to manufacture unifocal lenses with the same semi-finished spectacle lens blank 10 as for the progressive lens.

According to the example of figure 12, it is considered to edge semi-finished spectacle lens blank 10 of figure 10 both in the main area 56 and in the first peripheral zone 58. The area delimited by the dotted line share a limited peripheral zone with the first peripheral zone 58. Therefore, a lens having two parts may be obtained: in the main part 62, the lens may be progressive thanks to the correction made on the second surface whereas, in the minor part 64, the mean sphere value is superior to the mean sphere value of the main part 62.

It is thus proposed a lens with an additional zone above the far vision zone. Such lens is particularly suitable for do-it-yourself activity on an object which is located in a relatively high position.

It is thus proposed another lens with an additional zone below the near vision zone. Such lens is particularly suitable for reading, and notably in bed. Indeed, the minor part 62 can be used as a magnifier. This is due to the fact that the increase in spectacle lens magnification is achieved by providing a small amount of increase in power. The magnitude of this increase in spherical correction should be limited so that the resulting defocus or image blurring is not noticeable or is indeed below the level of perception

Another lens having two parts may also be obtained. In the main part 62, the lens may be a single vision one thanks to the correction made on the second surface (machining a sphere or a torus or an aspherical surface on it) whereas, in the minor part 64, the mean sphere value is superior to the mean sphere value of the main part 62. As the minor part 64 is in the lower part of the lens, such lens is particularly suitable for reading, notably in bed. Indeed, the minor part 64 can be used as an improved single vision lens limiting ocular tiredness.

According to the example of figure 13, it is considered to edge semi-finished spectacle lens blank 10 of figure 10 both in the main area 56 and in the second peripheral area 60. The area delimited by the dotted line share a limited peripheral zone with the second peripheral area 60.

Therefore, a lens having two parts may be obtained: in the main part 62, the lens may be progressive thanks to the correction made on the second surface whereas, in the minor part 64, the mean sphere value is inferior to the mean sphere value of the main part 62. It is thus proposed a lens with an additional zone below the near vision zone. Such lens is particularly suitable for climbing or going down the stairs. Such lens may also be used for playing golf.

Therefore, another lens having two parts may be obtained: in the main part 62, the lens may be single vision for near vision thanks to the correction made on the second surface whereas, in the minor part 64, the mean sphere value is inferior to the mean sphere value of the main part 62. As the minor part 64 is in the upper part of the lens, such lens is particularly suitable for computer activity.

Thus, it has been shown that starting from only one semi-finished spectacle lens blank 10, seven lenses can be manufactured. This advantage results in a reduced number of blanks for generating all usual lenses. In other words, such semi-finished spectacle lens blank 10 enables to minimize the stocking costs and inventory requirements.

The advantages provided by the above suggested blanks will be the most sensitive if a set of blanks comprising several semi-finished spectacle lens blanks as previously described is provided.

For inventory purposes, it is better if the blanks have the same configuration for the first surface SB1 and are indexed in power value, preferably indexed in difference of sphere between two areas since it facilitates their identification. Other kind of indexation may also be considered.

Such set of spectacle lens blanks may be used in a method for making a lens based on a blank as previously described, the method comprising a step of choosing the most appropriate blank in the set of blanks. The choice may be based on different criteria such as the facility of machining the unfinished surface of the lens blank, the availability of the stock, the price...

EXAMPLE 1

Example 1 is an example of a semi-finished spectacle lens blank 10 according to the case of figure 10. A surface characterization of the finished surface of lens blank 10 is given by providing mean sphere and cylinder maps.

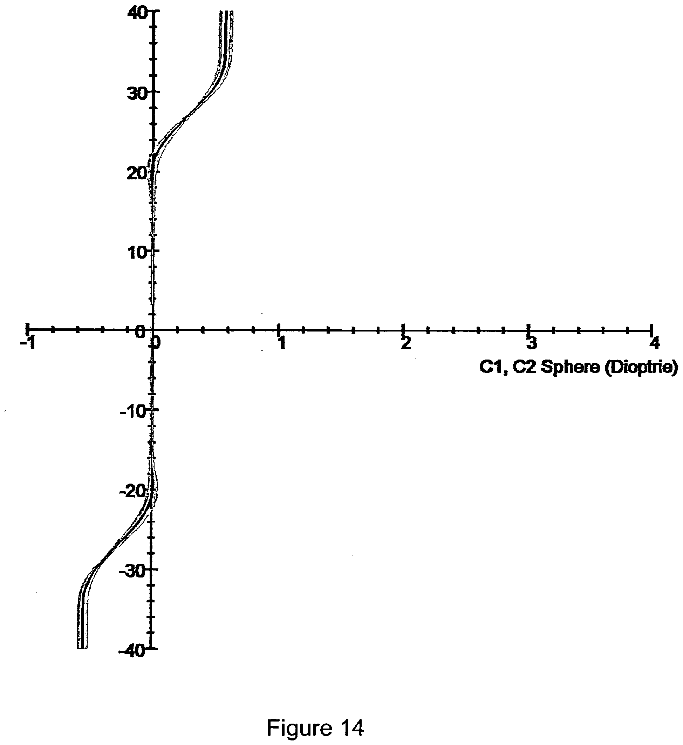

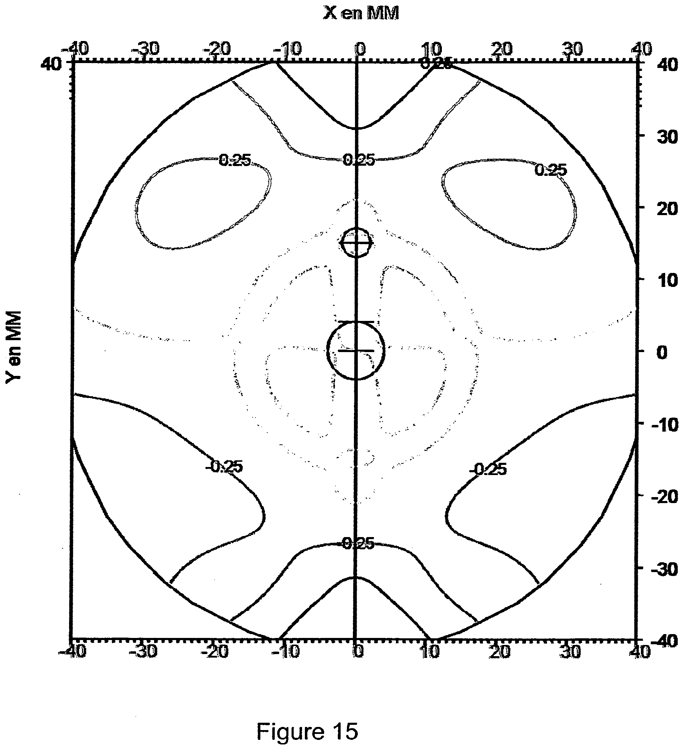

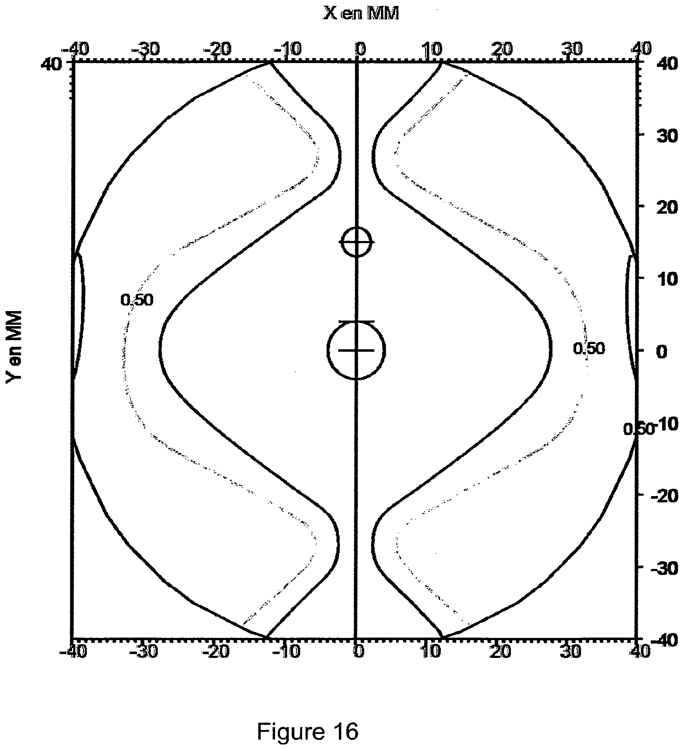

Figure 14 shows the variation of mean sphere and cylinder along the meridian. Thus, on figure 14, there are three curves: a middle curve and two extreme curves. The middle curve corresponds to the mean sphere variation whereas the distance between the extreme curves is representative of the cylinder. Figure 15 represents a map of mean sphere. Figure 15 is a graphic illustration of the equal mean sphere value lines, i.e. lines formed by the points having an identical mean sphere value. On this map, the evolution of the mean sphere has been shifted by an amount of 4 dioptres. Figure 16 represents a map of cylinder. Figure 16 is a graphic illustration of the equal cylinder value lines, i.e. lines formed by the points having an identical cylinder value.

By studying the maps, it appears that the surface comprises three areas: a main area MA with an area mean sphere value of 4 dioptres and two peripheral areas. The main area is a circle situated in the centre of blank 10. The diameter of the main area is 35 mm. The value of the cylinder in this main area is equal to 0 dioptre. Peripheral areas are circular areas of diameter 30 mm with respectively mean sphere values of 3.5 dioptres and 4.5 dioptres. The distance between each area is 12.5 mm.

The amount of cylinder induced by the choice of the mean sphere of surface SB1 does not introduce so much astigmatism that it would not be compensated for when finishing the unfinished surface of semi-finished spectacle lens blank 10.

EXAMPLE 2

Example 2 is an example of a semi-finished spectacle lens blank 10 according to the case of figure 10. A surface characterization of the finished surface of lens blank 10 is given by providing mean sphere and cylinder maps.

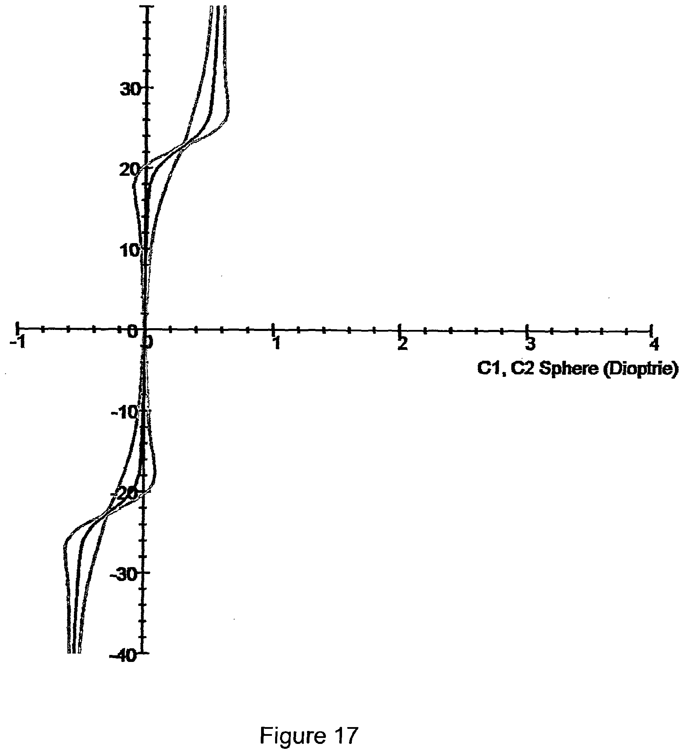

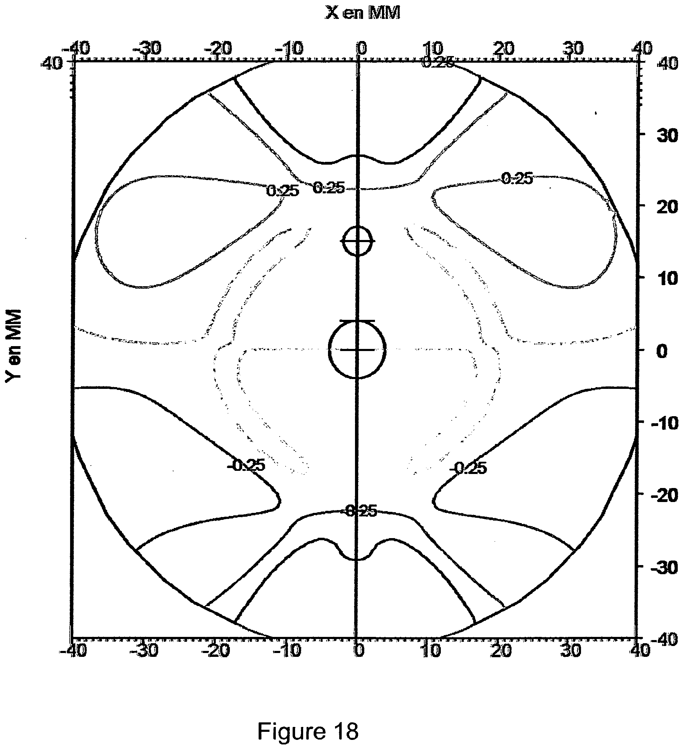

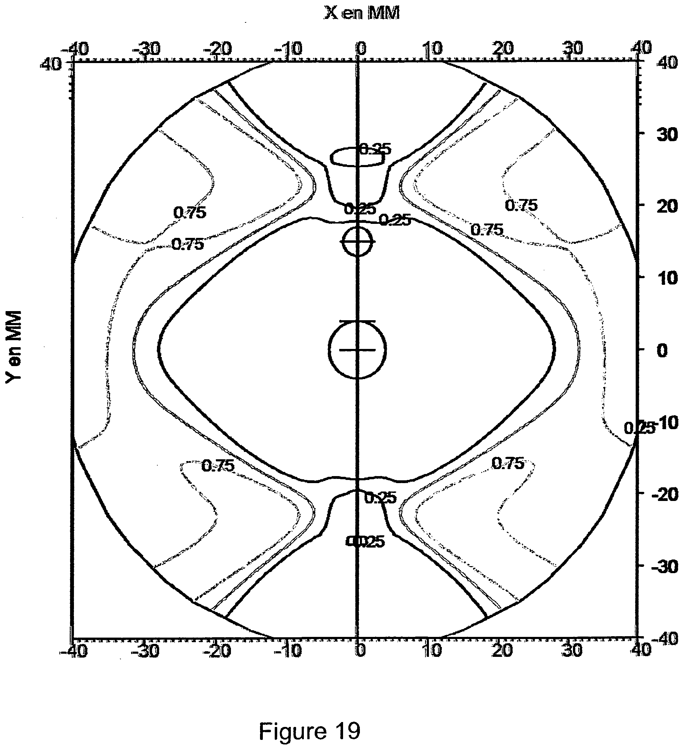

Figure 17 shows the variation of mean sphere and cylinder along the meridian. Thus, on figure 17, there are three curves: a middle curve and two extreme curves. The middle curve corresponds to the mean sphere variation whereas the distance between the extreme curves is representative of the cylinder. Figure 18 represents a map of mean sphere. Figure 18 is a graphic illustration of the equal mean sphere value lines, i.e. lines formed by the points having an identical mean sphere value. On this map, the evolution of the mean sphere has been shifted by an amount of 4 dioptres. Figure 19 represents a map of cylinder. Figure 19 is a graphic illustration of the equal cylinder value lines, i.e. lines formed by the points having an identical cylinder value.

By studying the maps, it appears that the surface comprises three areas: a main area MA with an area mean sphere value of 4 dioptres and two peripheral areas. The main area has an oblong shape situated in the centre of semi-finished spectacle lens blank 10. The dimensions of the main area are 30 mm by 40 mm. Peripheral areas are circular areas of diameter 30 mm with respectively mean sphere values of 3.5 dioptres and 4.5 dioptres. The distance between each area is 10 mm.

The amount of cylinder induced by the choice of the mean sphere of surface SB1 does not introduce so much astigmatism that it would not be compensated for when finishing the unfinished surface of semi-finished spectacle lens blank 10.

According to another object of the invention, the invention relates to a method for manufacturing an ophthalmic spectacle lens according to wearer's prescription data and wearer's optical needs, wherein the ophthalmic spectacle lens is based on an optical system OS according to method previously described.

The method for manufacturing comprises a step of providing a prescription for the wearer at a first location. The data are then transmitted from the first location to a second location.

The optical system is then determined and provided by carrying out the steps of the method 100 previously described at the second location.

Moreover, the method also comprises a step of machining the unfinished lens blank surface so as to provide the back surface S2 of the ophthalmic lens.

During this step, a well-known decentring processing method may be carrying out to process spectacle lenses. This decentring process can be a mechanical decentring process or a digital decentring process.

The method for manufacturing further comprises a second step of transmitting data relative to the optical system for edging to the third location.

Furthermore, this method for manufacturing an ophthalmic spectacle lens comprises a step of further edging the ophthalmic spectacle lens according to the contour data CD at a third location.

The transmitting steps can be achieved electronically. This enables to accelerate the method. The ophthalmic lens is therefore manufactured more rapidly.

To improve this effect, the first location, the second location and the third location may just be three different systems, one devoted to the collecting of data, one to calculation and the other to manufacturing, the three systems being situated in the same building. However, the three locations may also be three different companies, for instance one being a spectacle seller (optician), one being a laboratory and the other one a lens designer.

Furthermore, the invention also relates to a computer program product comprising one or more stored sequence of instructions that is accessible to a processor and which, when executed by the processor, causes the processor to carry out the steps of the different embodiments of the preceding methods.

The invention also proposes a computer readable medium carrying out one or more sequences of instructions of the preceding computer program product.

Unless specifically stated otherwise, as apparent from the following discussions, it is appreciated that throughout the specification discussions utilizing terms such as "evaluating", "computing", "calculating" "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer.

Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

**Claims**

1. Computer-implemented method for providing an optical system (OS) of an ophthalmic spectacle lens according to wearer's prescription data and wearer's optical needs with the provision that a wearer's optical need is not related to prescription data, where said optical system (OS) is defined by at least a front and a back surfaces (S1, S2) and their relative position, comprising the successive steps of:

   a) providing a semi-finished lens blank (SB) comprising a first surface (SB1) having in each point a mean sphere value (SPHmean) and a cylinder value (CYL), and a second unfinished surface (SB2), wherein the first surface (SB1) of said blank comprises a plurality of areas of localized optical features (LOF1, LOF2...);
   b) providing contour data (CD) defining the periphery of the front surface (S1) of the ophthalmic spectacle lens, where said contour data is inscribable within the first surface of the blank (SB1);
   c) choosing at least one localized optical feature (LOFi) suitable for the wearer's needs;
   d) positioning the contour data (CD) of step b) with relation to the first surface of the blank (SB1) so that the front surface (S1) comprises a zone intersecting (ZIi) with the areas of the localized optical features chosen in step c); and
   e) defining the back surface (S2) and its relative position with the front surface (S1) by using the wearer's prescription data and the front surface (S1);

   wherein the semi-finished lens blank comprises:

   - a first surface (SB1) having in each point a mean sphere value ($SPH_{mean}$) and a cylinder value (CYL),
   - a second unfinished surface,

   the first surface (SB1) comprising:

   - a main area of localized optical features, where the mean sphere value ($SPH_{mean}$) of each point of the main area is equal to the area mean sphere value of the said main area plus or minus 0.09 Dioptre, and the main area dimensions are such that a 20 mm diameter circle is inscribable within said main area (MA) said circle being centred at the geometrical centre of the first surface (S1);
   - at least a peripheral area (Ai) of localized optical features, where:

     • the mean sphere value ($SPH_{mean}$) of each point of a peripheral area (Ai) is equal to the area mean sphere value of the said peripheral area ($SPH_{area}$, Ai) plus or minus 0.09 Dioptre,
     • the peripheral area (Ai) dimensions are such that a 5 mm diameter circle is inscribable within said peripheral area (Ai),
     • the area mean sphere value of at least a peripheral area (Ai) is different from the area mean sphere value of the said main area,
     • the distance between the at least one peripheral zone and the main area is superior to 5 mm,
     • wherein an optical system is represented by equations or set of points defining the front and the back surface of an ophthalmic spectacle lens and their relative position and wherein an area mean sphere value is the mean of the sphere value of all points of the area considered,

   wherein the at least one area of localized optical features (LOF) is chosen within the list consisting of:

- an area having a constant cylinder value (CYL);
- an area with a surface treatment, such as a colour surface treatment, a filtering surface treatment;

and wherein the wearer's optical needs are chosen within the list consisting of:

- having an enhanced optical power in the top of the ophthalmic lens;
- having an enhanced optical power in the bottom of the ophthalmic lens;
- having a lowered optical power in the top of the ophthalmic lens;
- having a lowered optical power in the bottom of the ophthalmic lens;
- having an ophthalmic lens suitable for computer activity;
- having an ophthalmic lens suitable for stairs climbing;
- having an ophthalmic lens suitable for reading in bed;
- having an ophthalmic lens suitable for limiting ocular tiredness;
- having an ophthalmic lens suitable for do-it-yourself activity;
- having an enhanced image visual field in central vision of the ophthalmic lens;
- having a lowered prismatic deviation in peripheral vision or in central vision of the ophthalmic lens; and
- having an enhanced magnification in central or peripheral vision of the ophthalmic lens.

2. Method for providing an optical system (OS) of an ophthalmic spectacle lens according to preceding claim, wherein the contour data (CD) defining the periphery of the front surface (S1) of the ophthalmic spectacle lens is a contour data of a reference frame outline.

3. Method for providing an optical system (OS) of an ophthalmic spectacle lens according to claim 1 , wherein the contour data (CD) defining the periphery of the front surface (S1) of the ophthalmic spectacle lens is a contour data measured for a given spectacle lens frame.

4. Method for providing an optical system (OS) of an ophthalmic spectacle lens according to any of preceding claims, wherein defining the back surface (S2) and its relative position with relation to the front surface (S1) by using the wearer's prescription data and the front surface (S1) comprises the sub-steps of:

   - choosing a calculation point in the first surface (SB1);
   - calculating the mean sphere value, the cylinder value and the axis of said cylinder at the point on the back surface (S2) corresponding to the calculation point of the front surface (S1) so as to fulfil the requirements of the wearer's prescription at said point; and
   - building the back surface (S2) in each surface point with said calculated mean sphere value, cylinder value and axis of said cylinder.

5. Method for providing an optical system (OS) of an ophthalmic spectacle lens according to any of claims 1 to 3, wherein defining the back surface (S2) and its relative position with relation to the front surface (S1) by using the wearer's prescription data and the front surface (S1) comprises the sub-steps of:

   - providing a progressive lens design;
   - choosing a calculation point (Pc) in the first surface (SB1), the calculation point having a mean sphere value;
   - defining a virtual spherical front surface (VFS) having a constant mean sphere value equal to the mean sphere value of the calculation point; and
   - calculating the back surface (S2) so as to fulfil the requirements of the wearer's prescription and the provided progressive lens design when combined with the virtual spherical front surface (VFS)
   - wherein a design of an ophthalmic spectacle lens is the part of the optical system of a lens which is not determined by the wearer standard prescription parameters consisting of sphere, cylinder, axis and power addition values determined for said wearer.

6. Method for providing an optical system (OS) of an ophthalmic spectacle lens according to any of claims 1 to 3, wherein defining the back surface (S2) and its relative position with relation to the front surface (S1) by using the wearer's prescription data and the front surface (S1) comprises a step of optimization, in worn conditions, of the second surface (S2).

7. Method for manufacturing an ophthalmic spectacle lens according to wearer's prescription data and wearer's optical needs, wherein the ophthalmic spectacle lens is based on an optical system (OS) according to any of preceding claims 1 to 6 and the method comprises a step of machining the unfinished lens blank surface so as to provide the back surface (S2) of the ophthalmic lens.

8. Method for manufacturing an ophthalmic spectacle lens according to preceding claim, comprising a step of further edging the ophthalmic spectacle lens according to the contour data (CD).

9. A computer program product comprising one or more stored sequence of instructions that is accessible to a processor and which, when executed by the processor, causes the processor to carry out the steps of anyone of claims 1 to 8.

10. A computer readable medium carrying out one or more sequences of instructions of the computer program product of claim 9.

**Patentansprüche**

1. Computerimplementiertes Verfahren zum Bereitstellen eines optischen Systems (OS) eines ophthalmischen Brillenglases gemäß den Verschreibungsdaten des Trägers und den optischen Bedarfen des Trägers mit der Maßgabe, dass der optische Bedarf des Trägers nicht mit den Verschreibungsdaten in Beziehung steht, wobei das optische System (OS) durch wenigstens eine Vorder- und eine Hinterfläche (S1, S2) und ihre relative Position definiert ist, wobei das Verfahren die folgenden aufeinanderfolgenden Schritte umfasst:

a) Bereitstellen eines halbfertigen Linsenrohlings (SB), der eine erste Fläche (SB1), die in jedem Punkt einen mittleren Sphärenwert (SPHmean) und einen Zylinderwert (CYL) aufweist, und eine zweite unfertige Fläche (SB2) umfasst, wobei die erste Fläche (SB1) des Rohlings mehrere Bereiche lokalisierter optischer Merkmale (LOF1, LOF2, ...) umfasst;
b) Bereitstellen von Konturdaten (CD), die den Rand der Vorderfläche (S1) des ophthalmischen Brillenglases definieren, wobei die Konturdaten innerhalb der ersten Fläche des Rohlings (SB1) einbeschreibbar sind;
c) Wählen wenigstens eines lokalisierten optischen Merkmals (LOFi), das für die Bedarfe des Trägers geeignet ist;
d) Positionieren der Konturdaten (CD) des Schrittes b) in Bezug auf die erste Fläche des Rohlings (SB1), so dass die Vorderfläche (S1) eine Zone (ZIi) umfasst, die sich mit den Bereichen der im Schritt c) gewählten lokalisierten optischen Merkmale schneidet; und
e) Definieren der Hinterfläche (S2) und ihrer relativen Position bei der Vorderfläche (S1) unter Verwendung der Verschreibungsdaten des Trägers und der Vorderfläche (S1);

wobei der halbfertige Linsenrohling Folgendes umfasst:

- eine erste Fläche (SB1), die an jedem Punkt einen mittleren Sphärenwert ($SPH_{mean}$) und einen Zylinderwert (CYL) aufweist,
- eine zweite unfertige Fläche,

die erste Fläche (SB1) Folgendes umfasst:

- einen Hauptbereich lokalisierter optischer Merkmale, wobei der mittlere Sphärenwert ($SPH_{mean}$) jedes Punkts des Hauptbereichs gleich dem mittleren Bereichs-Sphärenwert des Hauptbereichs plus oder minus 0,09 Dioptrien ist und die Abmessungen des Hauptbereichs so sind, dass ein Kreis mit einem Durchmesser von 20 mm innerhalb des Hauptbereichs (MA) einschreibbar ist, wobei der Kreis am geometrischen Zentrum der ersten Fläche (S1) zentriert ist;
- mindestens einen peripheren Bereich (Ai) lokalisierter optischer Merkmale, wobei

• der mittlere Sphärenwert ($SPH_{mean}$) jedes Punkts eines peripheren Bereichs (Ai) gleich dem mittleren Bereichs-Sphärenwert des peripheren Bereichs ($SPH_{area}$, Ai) plus oder minus 0, 09 Dioptrien ist,
• die Abmessungen des peripheren Bereichs (Ai) so sind, dass ein Kreis mit einem Durchmesser von 5 mm innerhalb des peripheren Bereichs (Ai) einschreibbar ist,
• der mittlere Bereichs-Sphärenwert mindestens eines peripheren Bereichs (Ai) sich von dem mittleren Bereichs-Sphärenwert des Hauptbereichs unterscheidet,
• der Abstand zwischen der mindestens einen peripheren Zone und dem Hauptbereich größer als 5 mm ist,
• wobei ein optisches System durch Gleichungen oder Mengen von Punkten, die die Vorder- und die Hinterfläche eines ophthalmischen Brillenglases und ihre relative Position definieren, repräsentiert ist und wobei ein mittlerer Bereichs-Sphärenwert der Mittelwert des Sphärenwerts aller Punkte des betrachteten Bereichs ist,

wobei der mindestens eine Bereich der lokalisierten optischen Merkmale (LOF) innerhalb der Liste gewählt wird, die aus Folgendem besteht:

- einem Bereich, der einen konstanten Zylinderwert (CYL) aufweist;
- einen Bereich mit einer Oberflächenbehandlung, wie z. B. einer Farboberflächenbehandlung, einer Filteroberflächenbehandlung;

und wobei die optischen Bedarfe des Trägers innerhalb der Liste gewählt werden, die aus Folgendem besteht:

- Besitzen einer vergrößerten Brechkraft im Oberteil des Brillenglases;
- Besitzen einer vergrößerten Brechkraft im Unterteil des Brillenglases;
- Besitzen einer verringerten Brechkraft im Oberteil des Brillenglases;
- Besitzen einer verringerten Brechkraft im Unterteil des Brillenglases;
- Besitzen eines Brillenglases, das für die Computer-Aktivität geeignet ist;
- Besitzen eines Brillenglases, das für das Treppensteigen geeignet ist;
- Besitzen eines Brillenglases, das für das Lesen im Bett geeignet ist;
- Besitzen eines Brillenglases, das für das Begrenzen der Ermüdung der Augen geeignet ist;
- Besitzen eines Brillenglases, das für die Heimwerkeraktivität geeignet ist;
- Besitzen eines vergrößerten Bild-Gesichtsfelds beim zentralen Sehen des Brillenglases;
- Besitzen einer verringerten prismatischen Ablenkung beim peripheren Sehen oder beim zentralen Sehen des Brillenglases; und
- Besitzen einer vergrößerten Vergrößerung beim zentralen oder peripheren Sehen des Brillenglases.

2. Verfahren zum Bereitstellen eines optischen Systems (OS) eines ophthalmischen Brillenglases nach dem vorhergehenden Anspruch, wobei die Konturdaten (CD), die den Rand der Vorderfläche (S1) des ophthalmischen Brillenglases definieren, die Konturdaten eines Bezugsfassungsumrisses sind.

3. Verfahren zum Bereitstellen eines optischen Systems (OS) eines ophthalmischen Brillenglases nach Anspruch 1, wobei die Konturdaten (CD), die den Rand der Vorderfläche (S1) des ophthalmischen Brillenglases definieren, die für eine gegebene Brillenglasfassung gemessenen Konturdaten sind.

4. Verfahren zum Bereitstellen eines optischen Systems (OS) eines ophthalmischen Brillenglases nach einem der vorhergehenden Ansprüche, wobei das Definieren der Hinterfläche (S2) und ihrer relativen Position in Bezug auf die Vorderfläche (S1) unter Verwendung der Verschreibungsdaten des Trägers und der Vorderfläche (S1) die folgenden Teilschritte umfasst:

- Wählen eines Berechnungspunkts in der ersten Fläche (SB1) ;
- Berechnen des mittleren Sphärenwerts, des Zylinderwertes und der Achse des Zylinders an dem Punkt auf der Hinterfläche (S2), der dem Berechnungspunkt der Vorderfläche (S1) entspricht, um die Anforderungen der Verschreibung des Trägers an dem Punkt zu erfüllen; und
- Errichten der Hinterfläche (S2) in jedem Flächenpunkt mit dem berechneten mittleren Sphärenwert, dem berechneten Zylinderwert und der berechneten Achse des Zylinders.

5. Verfahren zum Bereitstellen eines optischen Systems (OS) eines ophthalmischen Brillenglases nach einem der Ansprüche 1 bis 3, wobei das Definieren der Hinterfläche (S2) und ihrer relativen Position in Bezug auf die Vorderfläche (S1) unter Verwendung der Verschreibungsdaten des Trägers und der Vorderfläche (S1) die folgenden Teilschritte umfasst:

- Bereitstellen einer fortschreitenden Linsenberechnung;
- Wählen eines Berechnungspunkts (Pc) in der ersten Fläche (SB1), wobei der Berechnungspunkt einen mittleren Sphärenwert aufweist;
- Definieren einer virtuellen sphärischen Vorderfläche (VFS), die einen konstanten mittleren Sphärenwert aufweist, der gleich dem mittleren Sphärenwert des Berechnungspunkts ist; und
- Berechnen der Hinterfläche (S2), um die Anforderungen der Verschreibung des Trägers und die bereitgestellte fortschreitende Linsenberechnung zu erfüllen, wenn sie mit der virtuellen sphärischen Vorderfläche (VFS) kombiniert ist,
- wobei eine Berechnung eines ophthalmischen Brillenglases der Teil des optischen Systems einer Linse ist, der nicht durch die Standardverschreibungsparameter des Trägers, die aus der Sphäre, dem Zylinder, der Achse und den Wirkungszusatzwerten, die für den Träger bestimmt worden sind, bestehen, bestimmt ist.

6. Verfahren zum Bereitstellen eines optischen Systems (OS) eines ophthalmischen Brillenglases nach einem der Ansprüche 1 bis 3, wobei das Definieren der Hinterfläche (S2) und ihrer relativen Position in Bezug auf die Vorderfläche (S1) unter Verwendung der Verschreibungsdaten des Trägers und der Vorderfläche (S1) einen Schritt der Optimierung der zweiten Fläche (S2) unter den Bedingungen des Tragens umfasst.

7. Verfahren zum Herstellen eines ophthalmischen Brillenglases gemäß den Verschreibungsdaten des Trägers und den optischen Bedarfen des Trägers, wobei das ophthalmische Brillenglas auf einem optischen System (OS) nach einem der vorhergehenden Ansprüche 1 bis 6 basiert und das Verfahren einen Schritt des Bearbeitens der Fläche des unfertigen Linsenrohlings umfasst, um die Hinterfläche (S2) des Brillenglases bereitzustellen.

8. Verfahren zum Herstellen eines ophthalmischen Brillenglases nach dem vorhergehenden Anspruch, das einen Schritt des weiteren Abschleifens des ophthalmischen Brillenglases gemäß den Konturdaten (CD) umfasst.

9. Computerprogrammprodukt, das eine oder mehrere gespeicherte Folgen von Anweisungen umfasst, die für einen Prozessor zugänglich sind und die, wenn sie durch den Prozessor ausgeführt werden, den Prozessor veranlassen, die Schritte irgendeines der Ansprüche 1 bis 8 auszuführen.

10. Computerlesbares Medium, das eine oder mehrere Folgen von Anweisungen des Computerprogrammprodukts nach Anspruch 9 ausführt.

**Revendications**

1. Procédé, mis en oeuvre par ordinateur, d'obtention d'un système optique (OS) d'un verre ophtalmique de lunettes en fonction de données de prescription d'un porteur et de besoins optiques du porteur à condition qu'un besoin optique du porteur ne soit pas associé à des données de prescription, ledit système optique (OS) étant défini par au moins une surface avant et une surface arrière (S1, S2) et leur position relative, comprenant les étapes successives consistant à :

a) se procurer une ébauche de verre semi-finie (SB) comprenant une première surface (SB1) ayant en chaque point une valeur sphérique moyenne (SPHmean) et une valeur cylindrique (CYL), et une deuxième surface non finie (SB2), la première surface (SB1) de ladite ébauche comprenant une pluralité de zones de caractéristiques optiques localisées (LOF1, LOF2, ...) ;
b) se procurer des données de contour (CD) définissant la périphérie de la surface avant (S1) du verre ophtalmique de lunettes, lesdites données de contour étant inscriptibles à l'intérieur de la première surface de l'ébauche (SB1) ;
c) choisir au moins une caractéristique optique localisée (LOFi) adaptée aux besoins du porteur ;
d) positionner les données de contour (CD) de l'étape b) par rapport à la première surface de l'ébauche (SB1) de telle sorte que la surface avant (S1) comprenne une zone d'intersection (ZIi) avec les zones des caractéristiques optiques localisées choisies à l'étape c) ; et
e) définir la surface arrière (S2) et sa position relative par rapport à la surface avant (S1) en utilisant les données de prescription du porteur et la surface avant (S1) ;

dans lequel l'ébauche de verre semi-finie (SB) comprend :

- une première surface (SB1) ayant en chaque point une valeur sphérique moyenne ($SPH_{mean}$) et une valeur cylindrique (CYL),
- une deuxième surface non finie,

la première surface (SB1) comprenant :

- une zone principale de caractéristiques optiques localisées, la valeur sphérique moyenne ($SPH_{mean}$) de chaque

point de la zone principale étant égale à la valeur sphérique moyenne de zone de ladite zone principale plus ou moins 0,09 dioptre, et les dimensions de la zone principale étant telles qu'un cercle de 20 mm de diamètre est inscriptible à l'intérieur de ladite zone principale (MA), ledit cercle étant centré sur le centre géométrique de la première surface (S1) ;
- au moins une zone périphérique (Ai) de caractéristiques optiques localisées, dans laquelle

• la valeur sphérique moyenne ($SPH_{mean}$) de chaque point d'une zone périphérique (Ai) est égale à la valeur sphérique moyenne de zone de ladite zone périphérique ($SPH_{area}$, Ai) plus ou moins 0,09 dioptre,
• les dimensions de la zone périphérique (Ai) sont telles qu'un cercle de 5 mm de diamètre est inscriptible à l'intérieur de ladite zone périphérique (Ai),
• la valeur sphérique moyenne de zone d'au moins une zone périphérique (Ai) est différente de la valeur sphérique moyenne de zone de la zone principale,
• la distance entre l'au moins une zone périphérique et la zone principale est supérieur à 5 mm,
• dans lequel un système optique est représenté par des équations ou un ensemble de points définissant la surface avant et la surface arrière d'un verre ophtalmique de lunettes et leur position relative et dans lequel une valeur sphérique moyenne de zone est la moyenne de la valeur sphérique de tous les points de la zone considérée,

dans lequel l'au moins une zone de caractéristiques optiques localisées (LOF) est choisie dans la liste constituée par :

- une zone ayant une valeur cylindrique constante (CYL) ;
- une zone avec un traitement de surface, tel qu'un traitement de surface de couleur, un traitement de surface filtrant ;

et dans lequel les besoins optiques du porteur sont choisis dans la liste constituée par :

- avoir une puissance optique accrue en haut du verre ophtalmique ;
- avoir une puissance optique accrue en bas du verre ophtalmique ;
- avoir une puissance optique réduite en haut du verre ophtalmique ;
- avoir une puissance optique réduite en bas du verre ophtalmique ;
- avoir un verre ophtalmique adapté à une activité sur ordinateur ;
- avoir un verre ophtalmique adapté à la montée des escaliers ;
- avoir un verre ophtalmique adapté à la lecture au lit ;
- avoir un verre ophtalmique adapté pour limiter la fatigue oculaire ;
- avoir un verre ophtalmique adapté à une activité de bricolage ;
- avoir un champ visuel image accru en vision centrale du verre ophtalmique ;
- avoir une déviation prismatique réduite en vision périphérique ou en vision centrale du verre ophtalmique ; et
- avoir un grossissement accru en vision centrale ou périphérique du verre ophtalmique.

**2.** Procédé d'obtention d'un système optique (OS) d'un verre ophtalmique de lunettes selon la revendication précédente, dans lequel les données de contour (CD) définissant la périphérie de la surface avant (S1) du verre ophtalmique de lunettes sont des données de contour d'un tracé de cadre de référence.

**3.** Procédé d'obtention d'un système optique (OS) d'un verre ophtalmique de lunettes selon la revendication 1, dans lequel les données de contour (CD) définissant la périphérie de la surface avant (S1) du verre ophtalmique de lunettes sont des données de contour mesurées pour une monture de verre de lunettes donnée.

**4.** Procédé d'obtention d'un système optique (OS) d'un verre ophtalmique de lunettes selon l'une quelconque des revendications précédentes, dans lequel la définition de la surface arrière (S2) et de sa position relative par rapport à la surface avant (S1) à l'aide des données de prescription du porteur et de la surface avant (S1) comprend les sous-étapes consistant à :

- choisir un point de calcul dans la première surface (SB1) ;
- calculer la valeur sphérique moyenne, la valeur cylindrique et l'axe dudit cylindre au point de la surface arrière (S2) correspondant au point de calcul de la surface avant (S1) de manière à respecter les exigences de la prescription du porteur audit point ; et
- construire la surface arrière (S2) à chaque point de surface avec ladite valeur sphérique moyenne, ladite valeur cylindrique et ledit axe calculés dudit cylindre.

**5.** Procédé d'obtention d'un système optique (OS) d'un verre ophtalmique de lunettes selon l'une quelconque des revendications 1 à 3, dans lequel la définition de la surface arrière (S2) et de sa position relative par rapport à la surface avant (S1) à l'aide des données de prescription du porteur et de la surface avant (S1) comprend les sous-étapes consistant à :

- obtenir un modèle de verre progressif ;
- choisir un point de calcul (Pc) dans la première surface (SB1), le point de calcul ayant une valeur sphérique moyenne ;
- définir une surface avant sphérique virtuelle (VFS) ayant une valeur sphérique moyenne constante égale à la valeur sphérique moyenne du point de calcul ; et
- calculer la surface arrière (S2) de manière à respecter les exigences de la prescription du porteur et le modèle de verre progressif obtenu quand ils sont combinés avec la surface avant sphérique virtuelle (VFS),
- dans lequel un modèle d'un verre ophtalmique de lunettes est la partie du système optique d'un verre qui n'est pas déterminée par les paramètres de prescriptions normaux du porteur composés de valeurs sphérique, cylindrique, d'axe et d'addition de puissance déterminées pour ledit porteur.

**6.** Procédé d'obtention d'un système optique (OS) d'un verre ophtalmique de lunettes selon l'une quelconque des revendications 1 à 3, dans lequel la définition de la surface arrière (S2) et de sa position relative par rapport à la surface avant (S1) à l'aide des données de prescription du porteur et de la surface avant (S1) comprend une étape d'optimisation, en conditions usées, de la deuxième surface (S2).

**7.** Procédé de fabrication d'un verre ophtalmique de lunettes en fonction de données de prescription d'un porteur et de besoins optiques du porteur, le verre ophtalmique de lunettes étant basé sur un système optique (OS) selon l'une quelconque des revendications 1 à 6 et le procédé comprenant une étape d'usinage de la surface d'ébauche de verre non finie de manière à obtenir la surface arrière (S2) du verre ophtalmique.

**8.** Procédé de fabrication d'un verre ophtalmique de lunettes selon la revendication précédente, comprenant une étape de débordage supplémentaire du verre ophtalmique de lunettes en fonction des données de contours (CD).

**9.** Produit-programme informatique comprenant une ou plusieurs séquences d'instructions stockées qui sont accessibles à un processeur et qui, exécutées par le processeur, conduisent le processeur à réaliser les étapes de l'une quelconque des revendications 1 à 8.

**10.** Support lisible par ordinateur portant une ou plusieurs séquences d'instructions du produit-programme informatique de la revendication 9.

+3.75D

65°

Figure 1

Center of segment
linking micro-markings

N=Z

MG

Micro-markings

X

x=0,y=0

Micro-markings

Figure 2

*Figure 3*

*Figure 4*

## Figure 5

## Figure 6

100

```
┌─────────────────────────────────────────┐
│                  102                     │
└─────────────────────────────────────────┘
                      │
                      ▼
┌─────────────────────────────────────────┐
│                  104                     │
└─────────────────────────────────────────┘
                      │
                      ▼
┌─────────────────────────────────────────┐
│                  106                     │
└─────────────────────────────────────────┘
                      │
                      ▼
┌─────────────────────────────────────────┐
│                  108                     │
└─────────────────────────────────────────┘
                      │
                      ▼
┌─────────────────────────────────────────┐
│                  110                     │
└─────────────────────────────────────────┘
```

Figure 7

Figure 8

Figure 9

Figure 10

Figure 11

Figure 12

Figure 13

Figure 14

Figure 15

Figure 16

Figure 17

Figure 18

Figure 19

**EP 2 780 761 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 1594059 A
- GB 439302 A
- WO 2007041796 A1
- FR 2842308
- US 6318859 A
- US 6948816 B

**Non-patent literature cited in the description**

- Ray tracing through progressive ophthalmic lenses. **B. BOURDONCLE et al.** Proc. Soc. Photo. Opt. Instrum. Eng. 1990